(19) Europäisches Patentamt
European Patent Office
Office européen des brevets

(11) **EP 1 531 400 B1**

(12) **EUROPEAN PATENT SPECIFICATION**

(45) Date of publication and mention
of the grant of the patent:
**31.07.2013 Bulletin 2013/31**

(51) Int Cl.:
***G06F 17/27*** *(2006.01)*     ***G10L 15/193*** *(2013.01)*

(21) Application number: **04026896.3**

(22) Date of filing: **12.11.2004**

(54) **Method and apparatus for processing natural language using MTA intersection**

Verfahren und Anordnung zur Bearbeitung natürlicher Sprache mittels MTA-Überschneidung

Procédé et dispositif de traitement de langage naturel par intersection des MTAs

(84) Designated Contracting States:
**DE FR GB**

(30) Priority: **14.11.2003 US 481639 P**
**21.05.2004 US 849919**
**21.05.2004 US 849918**

(43) Date of publication of application:
**18.05.2005 Bulletin 2005/20**

(73) Proprietor: **Xerox Corporation**
**Rochester, New York 14644 (US)**

(72) Inventors:
- **Kempe, André**
  **38000 Grenoble (FR)**
- **Guingne, Franck**
  **38000 Grenoble (FR)**
- **Nicart, Florent**
  **38000 Grenoble (FR)**

(74) Representative: **Grünecker, Kinkeldey,**
**Stockmair & Schwanhäusser**
**Leopoldstrasse 4**
**80802 München (DE)**

(56) References cited:
- **MOHRI M ET AL: "Weighted finite-state transducers in speech recognition" COMPUTER SPEECH AND LANGUAGE, ELSEVIER, LONDON, GB, vol. 16, no. 1, January 2002 (2002-01), pages 69-88, XP004418697 ISSN: 0885-2308**

- **MIKE REAPE AND HENRY THOMPSON: "Parallel Intersection and Serial Composition of Finite State Transducers" PROCEEDINGS OF THE 12TH CONFERENCE ON COMPUTATIONAL LINGUISTICS, [Online] 22 August 1988 (1988-08-22), pages 535-539, XP002363237 Budapest, Hungary Retrieved from the Internet: URL:http://portal.acm.org/citation.cfm?id= 991719.991749> [retrieved on 2006-07-17]**
- **GEORGE ANTON KIRAZ: "Linearization of Nonlinear Lexical Representations" COMPUTATIONAL PHONOLOGY: THIRD MEETING OF THE ACL SPECIAL INTEREST GROUP IN COMPUTATIONAL PHONOLOGY, [Online] 1997, pages 57-62, XP002363238 Madrid, Spain Retrieved from the Internet: URL:http: //acl.ldc.upenn.edu/W/W97/W97-110 8.pdf> [retrieved on 2006-01-12]**
- **"ALGORITHMS FOR WEIGHETD MULTI-TAPE AUTOMATA" XRCE RESEARCH REPORT, vol. 2004, no. 301, 2 June 2004 (2004-06-02), XP002363239**
- **M. MOHRI, F. PEREIRA AND M. RILEY: "The Design Principles of a Weighted Finite-State Transducer Library" THEORETICAL COMPUTER SCIENCE. SPECIAL ISSUE ON IMPLEMENTING AUTOMATA, [Online] vol. 231, no. 1, January 2000 (2000-01), XP002363240 Retrieved from the Internet: URL:http://www.cis.upenn.edu/ ~pereira/pape rs/tcs.pdf> [retrieved on 2006-01-12]**

**(Cont. next page)**

- F. PEREIRA AND M. RILEY: "Speech Recognition by Composition of weighted Finite Automata" IN EMMANUEL ROCHE AND YVES SCHABES, EDITORS, FINITE-STATE LANGUAGE PROCESSING, [Online] 1997, XP002363241 MIT Press, Cambridge, Massachusetts, USA Retrieved from the Internet: URL:http://citeseer.ist.psu.edu/pereira96s peech.html> [retrieved on 2006-01-12]
- M. MOHRI, F. PEREIRA AND M. RILEY: "Weighted Automata inText and Speech Processing" EXTENDED FINITE STATE MODELS OF LANGUAGE: PROCEEDINGS OF THE ECAI'96 WORKSHOP, [Online] 1996, XP002363242 Retrieved from the Internet: URL:http://citeseer.ist.psu.edu/mohri96wei ghted.html> [retrieved on 2006-01-17]
- A. KEMPE: "Extraction of epsilon-cycles from Finite State Transducers" LECTURE NOTES IN COMPUTER SCIENCE, 2002, pages 190-201, XP002363243 Springer Verlag, Berlin/Heidelberg, Germany

**Description**

BACKGROUND AND SUMMARY

The present invention relates to a method an apparatus for processing natural language using operations performed on weighted and non-weighted multi-tape automata.

Finite state automata (FSAs) are mathematically well defined and offer many practical advantages. They allow for fast processing of input data and are easily modifiable and combinable by well defined operations. Consequently, FSAs are widely used in Natural Language Processing (NLP) as well as many other fields. A general discussion of FSAs is described in Patent Application Publication US 2003/0004705 A1 and in "Finite State Morphology" by Beesley and Karttunen (CSLI Publications, 2003).

Weighted finite state automata (WFSAs) combine the advantages of ordinary FSAs with the advantages of statistical models, such as Hidden Markov Models (HMMs), and hence have a potentially wider scope of application than FSAs. Weighted multi-tape automata (WMTAs) have yet more advantages. For example, WMTAs permit the separation of different types of information used in NLP (e.g., surface word form, lemma, POS-tag, domain-specific information) over different tapes, and preserve intermediate results of different steps of NLP on different tapes. Operations on WMTAs may be specified to operate on one, several, or all tapes.

M. Mohri et al., in a paper entitled "Weighted finite-state transducers in speech recognition", Computer Speech and Language, Elsevier, London, GB, vol. 16, no. 1, January 2002, pages 69-88, describe the composition of two transducers such that the weight of a path in the composition represents a cross product of the weights of the corresponding paths of the two transducers that represent the constitutions of the composition. Moreover, it is disclosed that the composition has pairs of respective states of the two transducers. The intersection of two weighted acceptors is the composition of the corresponding transducers. An integrated transducer is optimized by both determinization and minimization.

M. Reape and H. Thompson, in a paper entitled "Parallel intersection and serial composition of finite state transducers", Proceedings of the 12th Conference on Computational Linguistics, 22 August 1988, pages 535-539, describe a parallel intersection algorithm comprising the product of two finite state transducers.

G.A. Kiraz, in a paper entitled "Linearization of nonlinear lexical representations", Computational Phonology: Third Meeting of the ACL special interest group in computational phonology", 1997, pages 57-62, describes a particular type of a composition of multi-tape machines.

F. Pereira and M. Riley, in a paper entitled "Speech recognition by composition of weighted finite automata", in Finite-State Language Processing, eds. E. Roche and Y. Schabes, MIT Press, Cambridge, USA, 1997, describe weighted finite-state transducers obtained based on a single composition algorithm.

M. Mohri et al., in a paper entitled "Weighted automata in text and speech processing", Extended Finite State Models of Language: Proceedings of the ECAI' 96 Workshop, 1996, describe a composition algorithm for weighted transducers wherein arcs are assigned weights or costs.

A. Kempe, in a paper entitled "Extraction of epsilon-cycles from finite state transducers", Lecture Notes in Computer Science, 2002, pages 190-201, Springer, Berlin/Heidelberg, describes an algorithm for extracting epsilon-cycles from finite-state transducers.

While some basic WMTAs operations, such as union, concatenation, projection, and complementary projection, have been defined for a sub-class of non-weighted multi-tape automata (see for example the publication by Kaplan and Kay, "Regular models of phonological rule systems", in Computational Linguistics, 20(3):331-378, 1994) and implemented (see for example the publication by Kiraz and Grimley-Evans, "Multi-tape automata for speech and language systems: Aprolog implementation", in D. Woods and S. Yu, editors, Automata Implementation, number 1436 in Lecture Notes in Computer Science, Springer Verlag, Berlin, Germany, 1998), there continues to be a need for improved, simplified, and more efficient operations for processing WMTAs to make use of these advantages in natural language processing.

in a system for processing natural language, a method for intersecting tapes of a first multi-tape automaton (MTA) and a second MTA, with each MTA having a plurality of tapes and a plurality of paths, comprising:

(a) computing a cross-product MTA using the first MTA and the second MTA;

(b) generating string tuples for paths of the cross-product MTA;

(c) for each string tuple generated at (b), evaluating whether the string of a first tape equals the string of a second tape;

(d) for each string tuple evaluated at (c) having equal strings at the first and second tapes, retaining the corresponding string tuple in the cross-product MTA;

(e) for each string tuple evaluated at (c) having unequal strings at the first and second tapes, restructuring the cross-product MTA to remove the corresponding string tuple;

(f) removing redundant strings in the string tuples retained in the cross-product MTA at (d) to produce an output MTA.

It will be appreciated that the present invention has the following advantages over weighted 1-tape or 2-tape processing of automata because it allows for: (a) the separation of different types of information used in NLP (e.g., surface form, lemma, POS-tag, domain-specific information, etc.) over different tapes; (b) the preservation of some or all intermediate results of various NLP steps on different tapes; and (c) the possibility of defining and implementing contextual replace rules referring to different types of information on different tapes.

BRIEF DESCRIPTION OF THE DRAWINGS

These and other aspects of the invention will become apparent from the following description read in conjunction with the accompanying drawings wherein the same reference numerals have been applied to like parts and in which:
Figure 1 is a flow diagram that sets forth steps for performing an auto-intersection operation;
Figure 2 presents two weighted three-tape automata for illustrating an example of the auto-intersection operation;
Figure 3 is a flow diagram that sets forth steps for performing a single-tape intersection operation of a first WMTA and a second WMTA;
Figure 4 presents two WMTAs for illustrating a simple example of the single-tape intersection operation;
Figure 5 sets forth a method in pseudocode for performing a cross-product operation in an embodiment with path alignment;
Figure 6 sets forth a first method in pseudocode for performing an auto-intersection operation;
Figure 7 presents two automata for illustrating the method for performing the auto-intersection operation set forth in Figure 6;
Figure 8 presents two automata for illustrating an example of the method for performing the auto-intersection operation set forth in Figure 6 that fails to perform auto-intersection;
Figure 9 sets forth a second method in pseudocode for performing an auto-intersection operation;
Figures 10 and 11 each present two automata for illustrating the method for performing the auto-intersection operation set forth in Figure 9 which results in a WMTA $A^{(n)}$ that is regular;
Figure 12 presents two automata for illustrating an example of the method for performing the auto-intersection operation set forth in Figure 9 which results in a WMTA $A^{(n)}$ that is not regular;
Figure 13 sets forth a first method in pseudocode for performing a single-tape intersection operation;
Figure 14 presents Mohri's epsilon-filter $A_\varepsilon$ and two automata $A_1$ and $A_2$;
Figure 15 sets forth a method in pseudocode of a second embodiment for performing the single-tape intersection operation;
Figure 16 presents an automaton for illustrating an operation for part-of-speech (POS) disambiguation and its use in natural language processing;
Figure 17 illustrates one path of the automaton shown in Figure 16;
Figure 18 illustrates the intersection of an arc with a path of a lexicon automaton;
Figure 19 illustrates the intersection of a path of a sentence automaton with a path of an HMM automaton;
Figure 20 illustrates an example of a (classical) weighted transduction cascade; and
Figure 21 illustrates an example of a weighted transduction cascade using multi-tape intersection;
Figure 22 illustrates a general purpose computer system for carrying out natural language processing in accordance with the present invention.

DETAILED DESCRIPTION

**Outline of Detailed Description**

A. Definitions

    A.1 Semirings
    A.2 Weighted Automata
    A.3 Weighted Multi-Tape Automata

B. Operations On Multi-Tape Automata

B.1 Pairing and Concatenation
B.2 Projection and Complementary Projection
B.3 Cross-Product
B.4 Auto-Intersection
B.5 Single-Tape Intersection
B.6 Multi-Tape Intersection
B.7 Transition Automata and Transition-Wise Processing

C. Methods For Performing MTA Operations

C.1 Cross-Product

C.1.1 Conditions

C.1.2 Path Concatenation Method

C.1.3 Path Alignment Method

C.1.4 Complexity

C.2 Auto-Intersection

C.2.1 Conditions Of First Method

C.2.2 First Method

C.2.3 Example Of First Method

C.2.4 Conditions Of Second Method

C.2.5 Second Method

C.2.5.A Compile Limits
C.2.5.B Construct Auto-Intersection
C.2.5.C Test Regularity

C.2.6 Examples Of Second Method

C.3 Single-Tape Intersection

C.3.1 Conditions
C.3.2 First Example
C.3.3 Mohri's Epsilon-Filter
C.3.4 Second Example
C.3.5 Complexity

C.4 Multi-Tape Intersection

C.4.1 Conditions
C.4.2 Embodiments
C.4.3 Example

D. Applications

D.1 General Use
D.2 Building A Lexicon From A Corpus
D.3 Enhancing A Lexicon With Lemmas
D.4 Normalizing A Lexicon

D.5 Using A Lexicon
D.6 Searching For Similarities
D.7 Preserving Intermediate Transduction Results
D.8 Example System

E. Miscellaneous

**A. Definitions**

This section recites basic definitions of algebraic structures that are used in describing the present invention, such as for "monoid" and "semiring" and "weighted automaton" (which are described in more detail in the following publications by: Eilenberg, "Automata, Languages, and Machines", volume A, Academic Press, San Diego, CA, USA, 1974; and Kuich and Salomaa, "Semirings, Automata, Languages", Number 5 in EATCS Monographs on Theoretical Computer Science, Springer Verlag, Berlin, Germany, 1986), and for weighted multitape automaton, based on the definitions of multi-tape automaton (which are described in more detail in the following publication by: Elgot and Mezei, "On relations defined by generalized finite automata", IBM Journal of Research and Development, 9:47-68, 1965).

**A.1 Semirings**

A monoid consists of a set M, an associative binary operation "o" on $M$, and a neutral element $\overline{1}$ such that $\overline{1}$ o a = a o $\overline{1}$ = a for all a $\in$ M. A monoid is called commutative iff a o b = b o a for all a, b $\in$ M.

The set $\boldsymbol{K}$ with two binary operations $\oplus$ (collection) and $\otimes$ (extension) and two elements $\overline{0}$ and $\overline{1}$ is called a semiring, if it satisfies the following properties:

(a) $<\boldsymbol{K},\oplus,\overline{0}>$ is a commutative monoid;

(b) $<\boldsymbol{K},\otimes,\overline{1}>$ is a monoid;

(c) $\otimes$ is left-distributive and right-distributive over $\oplus$ :

$$a \otimes (b \oplus c) = (a \otimes b) \oplus (a \otimes c), (a \oplus b) \otimes c = (a \otimes c) \oplus (b \otimes c), \forall a, b, c \in \boldsymbol{K};$$

(d) $\overline{0}$ is an annihilator for $\otimes$ : $\overline{0} \otimes a = a \otimes \overline{0} = \overline{0}$ , $\forall a \in \boldsymbol{K}$.

A generic semiring $\mathcal{K}$ is denoted as $<\boldsymbol{K},\oplus,\otimes, \overline{0}, \overline{1}>$.

Some methods for processing automata require semirings to have specific properties. Composition, for example, requires a semiring to be commutative (which is described in more detail in the following publications by: Pereira and Riley, "Speech recognition by composition of weighted finite automata", in Emmanuel Roche and Yves Schabes, editors, Finite-State Language Processing, MIT Press, Cambridge, MA, USA, pages 431-453, 1997; and Mohri, Pereira, and Riley, "A rational design for a weighted finite-state transducer library", Lecture Notes in Computer Science, 1436:144-158, 1998), and ε (i.e., epsilon) removal requires it to be k-closed (which is described in more detail in the following publication by: Mohri, "Generic epsilon-removal and input epsilon-normalization algorithms for weighted transducers", International Journal of Foundations of Computer Science, 13(1):129-143, 2002). These properties are defined as follows:

(a) commutativity: a $\otimes$ b = b $\otimes$ a , $\forall a, b \in \boldsymbol{K}$; and

(b) k-closedness: $\bigoplus\limits_{n=0}^{k+1} a^n = \bigoplus\limits_{n=0}^{k} a^n$ , $\forall a \in \boldsymbol{K}$.

The following well-known examples are all commutative semirings:

(a) $< IB ,+,\times, 0, 1>$: boolean semiring, with $IB = \{0, 1\}$ and 1+1=1;
(b) $<IN ,+,\times, 0, 1>$: integer semiring with the usual addition and multiplication;
(c) $< IR^+,+,\times, 0, 1>$: real positive sum times semiring;
(d) $< \overline{IR^+} ,min,+,\infty, 0>$: a real tropical semiring where $\overline{IR^+}$ denotes $\overline{IR^+} \cup\{\infty\}$.

A number of methods for processing automata require semirings to be equipped with an order or partial order denoted by $<_\kappa$. Each idempotent semiring $\mathcal{K}$ (i.e., $\forall a \in \mathcal{K}:a\oplus a=a$) has a natural partial order defined by a $<_\mathcal{K}$ b $\Leftrightarrow$ a $\oplus$ b = a. In the above examples, the boolean and the real tropical semiring are idempotent, and hence have a natural partial order.

**A.2 Weighted Automata**

A weighted automaton *A* over a semiring $\mathcal{K}$ is defined as a six-tuple:

$$A \; =_{\textbf{def}} \; \langle \Sigma, Q, I, F, E, \mathcal{K} \rangle$$

with:

| | | |
|---|---|---|
| $\Sigma$ | | being a finite alphabet |
| $Q$ | | the finite set of states |
| $I$ | $\subseteq Q$ | the set of initial states |
| $F$ | $\subseteq Q$ | the set of final states |
| $E$ | $\subseteq Q \times (\Sigma \cup \{\varepsilon\}) \times Q$ | the finite set of transitions and |
| $\kappa$ | $= \langle K, \overline{0,1}, \oplus, \otimes \rangle$ | the semiring |

For any state $q \in Q$, there is defined:

| | | |
|---|---|---|
| $\lambda(q)$ | $\lambda : I \to \kappa$ | the initial weight function (with $\lambda(q) = \overline{0}, \; \forall q \notin I$) |
| $\varrho(q)$ | $\varrho Q : F \to \kappa$ | the final weight function (with $\varrho(q) = \overline{0}, \; \forall q \notin F$) |
| $E(q)$ | $= \{e \mid p(e) = q\}$ | the finite set of out-going transitions |

and for any transition $e \in E$, $e = <p, \ell, w, n>$, there is defined:

| | | |
|---|---|---|
| $p(e)$ | $p : E \to Q$ | the source state |
| $\ell(e)$ | $\ell : E \to \Sigma \cup \{\varepsilon\}$ | the label (with $\varepsilon$ being the empty string) |
| $w(e)$ | $w : E \to \kappa$ | the weight (with $w(e) \neq \overline{0}, \; \forall e \in E$) |
| $n(e)$ | $n : E \to Q$ | the target state |

A path $\pi$ of length $r = |\pi|$ is a sequence of transitions $e_1 e_2 \dots e_r$ such that $n(e_i) = p(e_i + 1)$ for all $i \in [[1, r-1]]$. A path is said to be successful iff $p(e_1) \in I$ and $n(e_r) \in F$. In the following description only successful paths are considered. The label, $\hat{\ell}(\pi)$, of any successful path $\pi$ equals the concatenation of the labels of its transitions:

$$\hat{\ell}(\pi) \;\; = \;\; \ell(e_1)\,\ell(e_2) \cdots \ell(e_r)$$

and its "weight" or "accepting weight" $w(\pi)$ is:

$$w(\pi) \;\; = \;\; \lambda(p(e_1)) \otimes \left( \bigotimes_{j=[1,l]} w(e_j) \right) \otimes \varrho(n(e_r))$$

$\Pi(s)$ denotes the (possibly infinite) set of successful paths of *A* and $\Pi(s)$ denotes the (possibly infinite) set of successful paths for the string s:

$$\Pi(s) \;\; = \;\; \{ \, \pi \mid \forall \pi \in \Pi(A), s = \hat{\ell}(\pi) \, \}$$

*L(A)* is defined as the language of *A.* It is the (possibly infinite) set of strings *s* having successful paths in *A*:

$$\mathcal{L}(A) \;=\; \{\, \hat{\ell}(\pi) \mid \pi \in \Pi(A) \,\}$$

The accepting weight for any string $s \in L(A)$ is defined by:

$$w(s) \;=\; \bigoplus_{\pi \in \Pi(s)} w(\pi)$$

**A.3 Weighted Multi-Tape Automata**

In analogy to a weighted automaton, a weighted multi-tape automaton (WMTA), also called weighted n-tape automaton, over a semiring $\kappa$ is defined as a six-tuple:

$$A^{(n)} \;=_{\mathrm{def}}\; \langle \Sigma, Q, I, F, E^{(n)}, \mathcal{K} \rangle$$

with $\Sigma$, $Q$, $I$, $F$, and $\kappa$ being defined as above in section A.2, and with:

$E^{(n)} \, n \qquad \subseteq Q \times (\Sigma \cup \{\varepsilon\})^n \times Q \qquad$ being the finite set of $n$-tape transitions and the arity, i.e., the number of tapes in $A$

Most of the definitions given for weighted automata are also valid for WMTAs, except that each transition $e^{(n)} \in E^{(n)}$ is labeled with:

$\ell(e^{(n)}) \qquad \ell : E^{(n)} \to (\Sigma \cup \{\varepsilon\})^n \qquad$ an $n$-tuple of symbols

If all symbols $\sigma \in (\Sigma \cup \{\varepsilon\})$ of a tuple are equal, the short-hand notationa $\sigma^{(n)}$ may be used on the terminal symbol. For example:

$$a^{(3)} \;=\; \langle a, a, a \rangle$$

$$\varepsilon^{(2)} \;=\; \langle \varepsilon, \varepsilon \rangle$$

The label of a successful path $\pi^{(n)}$ of length $r = |\pi^{(n)}|$ equals the concatenation of the labels of its transitions, all of which must have the same arity n:

$$\hat{\ell}(\pi^{(n)}) \;=\; \ell(e_1^{(n)})\, \ell(e_2^{(n)}) \,\cdots\, \ell(e_r^{(n)})$$

which is an n-tuple of strings:

$$\hat{\ell}(\pi^{(n)}) = s^{(n)} = \langle s_1, s_2, \ldots, s_n \rangle$$

where each string $s_j$ is a concatenation of the $j$-th element of all $\mathcal{1}(e_i^{(n)})$ of $\pi^{(n)}$ (with $i \in [[1,r]]$). In anticipation of the projection operation, $P_j()$, (defined in section B.2) this can be expressed as:

$$s_j \;=\; \mathcal{P}_j(\hat{\ell}(\pi^{(n)})) \;=\; \mathcal{P}_j(\ell(e_1^{(n)}))\, \mathcal{P}_j(\ell(e_2^{(n)})) \,\cdots\, \mathcal{P}_j(\ell(e_r^{(n)}))$$

The symbols on $e^{(n)}$ are not "bound" to each other. For example, the string triple $s^{(3)} = <aaa, bb, ccc>$ can be encoded, among others, by any of the following sequences of transitions: (a:b:c)(a:b:c)(a:ε:c) or (a:b:c)(a:ε:c)(a:b:c) or (ε:ε:c)(a:b:c)(a:b:c)(a:ε:ε), etc.

Π(s) denotes the (possibly infinite) set of successful paths for the n-tuple of strings $s^{(n)}$:

$$\Pi(s^{(n)}) \;=\; \{\; \pi^{(n)} \mid \forall \pi^{(n)} \in \Pi(A^{(n)}),\, s^{(n)} = \hat{\ell}(\pi^{(n)}) \;\}$$

$L(A^{(n)})$ is called the n-tape language of $A^{(n)}$ (which may also be referred to as a relation of arity(n)). It is the (possibly infinite) set of n-tuples of strings $s^{(n)}$ having successful paths in $A^{(n)}$:

$$\mathcal{L}(A^{(n)}) \;=\; \{\; \ell^{(n)} \mid \ell^{(n)} = \hat{\ell}(\pi^{(n)}),\, \forall \pi^{(n)} \in \Pi(A^{(n)}) \;\}$$

The accepting weight for any n-tuple of strings $s^{(n)} \in L(A^{(n)})$ is defined by:

$$w(s^{(n)}) \;=\; \bigoplus_{\pi^{(n)} \in \Pi(s^{(n)})} w(\pi^{(n)})$$

It is possible to define an arbitrary weighted relation between the different tapes of $L(A^{(n)})$. For example, $L(A^{(2)})$ of the weighted transducer (i.e., two-tape automata) $A^{(2)}$ is usually considered as a weighted relation between its two tapes, $P_1(L(A^{(2)}))$ and $P_2(L(A^{(2)}))$. One of the two tapes is considered to be the input tape, the other as the output tape.

**B. Operations On Multi-Tape Automata**

All operations defined in this section are defined on symbol tuples, string tuples, or n-tape languages, taking their accepting weights into account. Whenever these operations are used on transitions, paths, or automata, they are actually applied to their labels or languages respectively. For example, the binary operation ö on two automata, $A_1^{(n)}$ ö $A_2^{(n)}$, actually means $L(A_1^{(n)} \text{ ö } A_2^{(n)}) = L(A_1^{(n)}) \text{ ö } L(A_2^{(n)})$, and the unary operation ȯ on one automaton, $\dot{\text{o}} A^{(n)}$, actually means $L(\dot{\text{o}} A^{(n)}) = \dot{\text{o}} L(A^{(n)})$.

**B.1 Pairing and Concatenation**

The pairing of two string tuples, $s^{(n)} : v^{(m)} = u^{(n+m)}$, and its accepting weight is defined as:

$$\langle s_1, \ldots, s_n \rangle : \langle v_1, \ldots, v_m \rangle \quad =_{\text{def}} \quad \langle s_1, \ldots, s_n, v_1, \ldots, v_m \rangle$$

$$w(\, \langle s_1, \ldots, s_n \rangle : \langle v_1, \ldots, v_m \rangle \,) \quad =_{\text{def}} \quad w(\, \langle s_1, \ldots, s_n \rangle \,) \otimes w(\, \langle v_1, \ldots, v_m \rangle \,)$$

1-tuples of strings are not distinguished herein from strings, and hence, instead of writing $s^{(1)}:v^{(1)}$ or <s>:<v>, s:v is simply written. If strings contain only one symbol $\sigma \in (\Sigma \cup \varepsilon)$, they are not distinguished from the strings and their only symbol, and instead the pairing $\sigma_1 : \sigma_2$ is written.

Pairing is associative:

$$s_1^{(n_1)} : s_2^{(n_2)} : s_3^{(n_3)} \;=\; \left( s_1^{(n_1)} : s_2^{(n_2)} \right) : s_3^{(n_3)} \;=\; s_1^{(n_1)} : \left( s_2^{(n_2)} : s_3^{(n_3)} \right) \;=\; s^{(n_1 + n_2 + n_3)}$$

The concatenation of two sting tuples of equal arity, $s^{(n)} v^{(n)} = u^{(n)}$, and its accepting weight are defined as:

$$\langle s_1, \ldots, s_n \rangle \langle v_1, \ldots, v_n \rangle \quad =_{\text{def}} \quad \langle s_1 v_1, \ldots, s_n v_n \rangle$$

$$w(\, \langle s_1, \ldots, s_n \rangle \langle v_1, \ldots, v_n \rangle \,) \quad =_{\text{def}} \quad w(\, \langle s_1, \ldots, s_n \rangle \,) \otimes w(\, \langle v_1, \ldots, v_n \rangle \,)$$

Again, 1-tuples of strings are not distinguished herein from strings, and hence, instead of writing $s^{(1)}v^{(1)}$ or $<s><v>$, $sv$ is simply written. If strings contain only one symbol $\sigma \in (\Sigma \cup \varepsilon)$, they are not distinguished from the strings and their only symbol, and instead the concatenation $\sigma_1\sigma_2$ is written.

Concatenation is associative:

$$s_1^{(n)} s_2^{(n)} s_3^{(n)} \; = \; \left( s_1^{(n)} s_2^{(n)} \right) s_3^{(n)} \; = \; s_1^{(n)} \left( s_2^{(n)} s_3^{(n)} \right) \; = \; s^{(n)}$$

The relation between pairing and concatenation can be expressed through a matrix of string tuples $s_{jk}^{(n_j)}$ given by:

$$\begin{bmatrix} s_{11}^{(n_1)} & \cdots & s_{1r}^{(n_1)} \\ \vdots & & \vdots \\ s_{m1}^{(n_m)} & \cdots & s_{mr}^{(n_m)} \end{bmatrix}$$

that are horizontally concatenated and vertically paired:

$$\begin{aligned} s^{(n_1 + \ldots + n_m)} \; &= \; \left( s_{11}^{(n_1)} \cdots s_{1r}^{(n_1)} \right) \; : \; \cdots \; : \; \left( s_{m1}^{(n_m)} \cdots s_{mr}^{(n_m)} \right) \\ &= \; \left( s_{11}^{(n_1)} \; : \; \cdots \; : \; s_{m1}^{(n_m)} \right) \cdots \left( s_{1r}^{(n_1)} \; : \; \cdots \; : \; s_{mr}^{(n_m)} \right) \end{aligned}$$

where the equation above does not hold for the accepting weights unless they are defined over a commutative semiring $\mathcal{K}$.

**B.2 Projection and Complementary Projection**

A projection $P_{j,k,\ldots}$ $(s^{(n)})$ retains only those strings (i.e., tapes) of the tuple $s^{(n)}$ that are specified by the indices $j, k, \ldots \in [[1,n]]$, and places them in the specified order. The projection and its accepting weight are defined as:

$$\mathcal{P}_{j,k,\ldots}( \langle s_1, \ldots, s_n \rangle ) \quad =_{\mathbf{def}} \quad \langle s_j, s_k, \ldots \rangle$$

$$w ( \mathcal{P}_{j,k,\ldots}( \langle s_1, \ldots, s_n \rangle ) ) \quad =_{\mathbf{def}} \quad w ( \langle s_1, \ldots, s_n \rangle )$$

where the weights are not modified by the projection. Projection indices can occur in any order and more than once. Thus, the tapes of $s^{(n)}$ can, for example, be reversed or duplicated:

$$\mathcal{P}_{n,\ldots,1}( \langle s_1, \ldots, s_n \rangle ) \; = \; \langle s_n, \ldots, s_1 \rangle$$

$$\mathcal{P}_{j,j,j}( \langle s_1, \ldots, s_n \rangle ) \; = \; \langle s_j, s_j, s_j \rangle$$

The relation between projection and pairing, and between their respective accepting weights is:

$$s^{(n)} \; = \; \mathcal{P}_1(s^{(n)}) \; : \; \cdots \; : \; \mathcal{P}_n(s^{(n)})$$

$$w(s^{(n)}) \neq w\left(\mathcal{P}_1(s^{(n)}) : \cdots : \mathcal{P}_n(s^{(n)})\right) = \underbrace{w(s^{(n)}) \otimes \cdots \otimes w(s^{(n)})}_{n \text{ times}}$$

A complementary projection $\overline{P}_{j,k,\ldots}(s^{(n)})$ removes those strings (i.e., tapes) of the tuple $s^{(n)}$ that are specified by the indices $j,k,\ldots \in [[1,n]]$, and preserves all other strings in their original order. Complementary projection and its accepting weight are defined as:

$$\overline{\mathcal{P}}_{j,k,\ldots}(\langle s_1,\ldots,s_n \rangle) =_{\text{def}} \langle \ldots, s_{j-1}, s_{j+1}, \ldots, s_{k-1}, s_{k+1}, \ldots \rangle$$
$$w(\overline{\mathcal{P}}_{j,k,\ldots}(\langle s_1,\ldots,s_n \rangle)) =_{\text{def}} w(\langle s_1,\ldots,s_n \rangle)$$

Complimentary projection indices can occur only once, but in any order.
The projection of an n-tape language is the projection of all its string tuples and complimentary projection of an n-tape language is defined in the same way, respectively as:

$$\mathcal{P}_{j,k,\ldots}(\mathcal{L}^{(n)}) = \{ \mathcal{P}_{j,k,\ldots}(s^{(n)}) \mid \forall s^{(n)} \in \mathcal{L}^{(n)} \}$$
$$\overline{\mathcal{P}}_{j,k,\ldots}(\mathcal{L}^{(n)}) = \{ \overline{\mathcal{P}}_{j,k,\ldots}(s^{(n)}) \mid \forall s^{(n)} \in \mathcal{L}^{(n)} \}$$

**B.3 Cross-Product**
The cross-product of two n-tape languages is defined as:

$$\mathcal{L}_1^{(n)} \times \mathcal{L}_2^{(m)} =_{\text{def}} \{ s^{(n)} : v^{(m)} \mid \forall s^{(n)} \in \mathcal{L}_1^{(n)}, \forall v^{(m)} \in \mathcal{L}_2^{(m)} \}$$

The accepting weight of each string tuple in $L_1^{(n)} \times L_2^{(m)}$ follows from the definition of pairing. The cross product operation is associative.
A well known example (and special case) is the cross-product of two acceptors (i.e., a 1-tape automata) leading to a transducer (i.e., a 2-tape automaton):

$$A^{(2)} = A_1^{(1)} \times A_2^{(1)}$$

$$\mathcal{L}(A_1^{(1)} \times A_2^{(1)}) = \{ s{:}v \mid \forall s \in \mathcal{L}(A_1^{(1)}), \forall v \in \mathcal{L}(A_2^{(1)}) \}$$

$$w(s{:}v) = w_{A_1}(s) \otimes w_{A_2}(v)$$

**B.4 Auto-Intersection**
Operations for auto-intersection are described in this section. More specifically, this section describes operations for performing auto-intersection on string tuples and languages.
The auto-intersection $I_{j,k}(s^{(n)})$ on string tuples succeeds, if the two strings $s_j$ and $s_k$ of the tuple $s^{(n)} = \langle s_1, \ldots, s_n \rangle$ are equal (with $j,k \in [[1,n]]$), and fails otherwise ($\perp$). Auto-intersection and its accepting weight are defined as:

$$\mathcal{I}_{j,k}(s^{(n)}) =_{\text{def}} \begin{cases} s^{(n)} & \text{for} \quad s_j = s_k \\ \perp & \text{for} \quad s_j \neq s_k \end{cases}$$

$$w\left(\mathcal{I}_{j,k}(\,s^{(n)}\,)\right) \quad =_{\mathbf{def}} \quad \left\{ \begin{array}{ll} w(\,s^{(n)}\,) & \text{for} \quad s_j = s_k \\ \bar{0} & \text{for} \quad s_j \neq s_k \end{array} \right.$$

This means the weight of a successfully auto-intersected string tuple is not modified, whereas the weight of a string tuple where the auto-intersection failed is $\bar{0}$, which corresponds to the invalidation or elimination of that tuple.

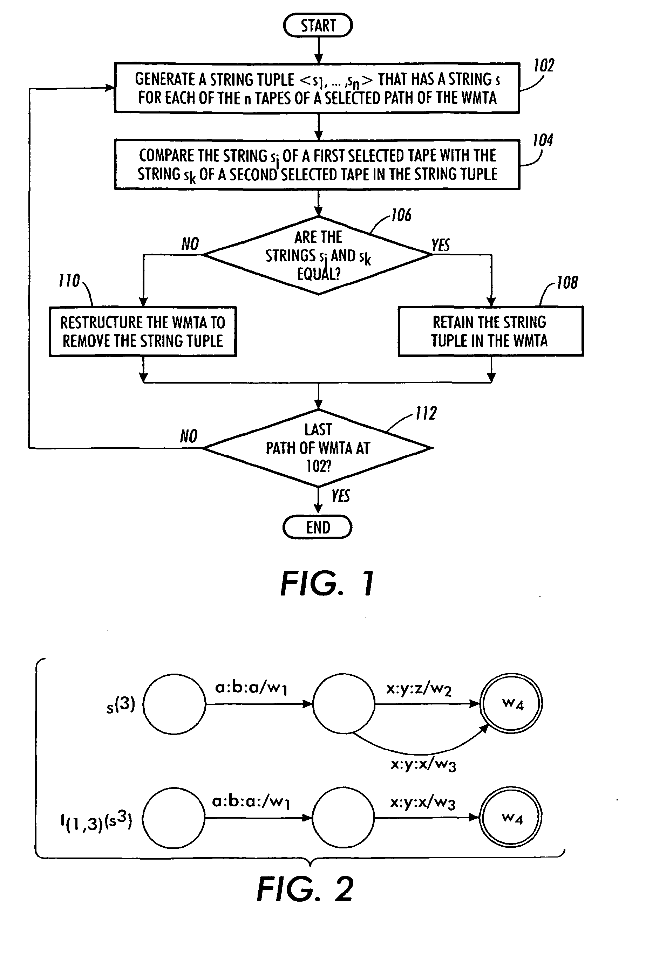

Figure 1 is a flow diagram that sets forth steps for performing the auto-intersection operation on a first tape and a second tape of a path of a weighted multi-tape automaton. At 102, a string tuple $<s_1, \dots, s_n>$ is generated that has a string s for each of the $n$ tapes of a selected path of the WMTA. At 104, the string $s_j$ of the first tape is compared with the string $s_k$ of the second tape in the string tuple. If at 106, the strings $s_j$ and $s_k$ are equal, then the string tuple is retained in the WMTA at 108; otherwise, the WMTA is restructured to remove the string tuple at 110. At 112, if the last of the paths of the WMTA has been processed, then auto-intersection completes; otherwise, it continues with the next selected path of the WMTA at 102.

For example, the result of performing the auto-intersection operation $I_{j,k}(s^{(n)})$ on tapes 1 and 3 of the example three-tape WMTA (i.e., $s^{(3)}$) shown Figure 2 fails for the first of its two paths, producing a first string tuple <ax, by, az> (with weight $w_1w_2$), but succeeds for the second of its two paths, producing a second string tuple <ax, by, ax> (with weight $w_1w_3$). The final state of the WMTA has weight $w_4$. Because the strings of tape 1 (i.e., "ax") and tape 3 (i.e., "az") of the first string tuple <ax, by, az> are not equal unlike the strings of tape 1 (i.e., "ax") and tape 3 (i.e., "ax") of the second string tuple <ax, by, ax>, the WMTA shown in Figure 2 is restructured to remove the arc x:y:x/$w_2$ of the first path because there are no other successful paths in the WMTA that depend on that arc (i.e., $I_{(1,3)}(s^{(3)})$). The result of the auto-intersection of the two selected tapes 1 and 3 of the WMTA is to filter out all string tuples of the WMTA except for those that have strings that are equal on two selected tapes.

More generally, auto-intersection of a language, $I_{j,k}(L^{(n)})$, equals the auto-intersection of all of its string tuples such that only the successfully auto-intersected string tuples are retained, which may be defined as:

$$\mathcal{I}_{j,k}(\,\mathcal{L}^{(n)}\,) \quad =_{\mathbf{def}} \quad \{\,s^{(n)} \mid s_j = s_k\,,\ s^{(n)} \in \mathcal{L}^{(n)}\,\}$$

$$\mathcal{I}_{j,k}(\,\mathcal{L}^{(n)}\,) \quad = \quad \{\,\mathcal{I}_{j,k}(s^{(n)}) \mid s^{(n)} \in \mathcal{L}^{(n)}\,\}$$

$$\mathcal{I}_{j,k}(\,\mathcal{L}^{(n)}\,)_1 \quad \subseteq \quad \mathcal{L}^{(n)}$$

For example, given a language $L_1^{(3)}$ (where "*" denotes kleen star):

$$L_1^{(3)} = \langle a,\,x,\,\varepsilon\rangle\,\langle b,\,y,\,a\rangle^*\langle\varepsilon,\,z,\,b\rangle = \langle ab^*,\,xy^*z,\,a^*b\rangle,$$

the results of its auto-intersection $I_{1,3}(L_1^{(3)})$ of tapes 1 and 3 is:

$$I_{1,3}(L_1^{(3)}) = \{\langle ab,\,xyz,\,ab\rangle\}$$

which means the auto-intersection admits a single iteration through the cycle <b,y,a>* (i.e., "*" takes only the value 1).

**B.5 Single-Tape Intersection**

Single-tape intersection of two multi-tape languages, $L_1^{(n)}$ and $L_2^{(m)}$, is based on one single tape $j$ and $k$ from each of their sets of $n$ and $m$ tapes, respectively, and may be defined as:

$$\mathcal{L}_1^{(n)} \underset{j,k}{\cap} \mathcal{L}_2^{(m)} \quad =_{\mathbf{def}} \quad \overline{\mathcal{P}}_{n+k}\left(\mathcal{I}_{j,n+k}(\,\mathcal{L}_1^{(n)} \times \mathcal{L}_2^{(m)})\right).$$

The single-tape intersection operation pairs each string tuple $s^{(n)} \in L_1^{(n)}$ with each string tuple $v^{(m)} \in L_2^{(m)}$ iff $s_j = v_k$. The resulting language $L^{(n+m-1)}$ is defined as:

$$\mathcal{L}^{(n+m-1)} = \{\, u^{(n+m-1)} \mid u^{(n+m-1)} = \overline{\mathcal{P}}_{n+k}(s^{(n)}:v^{(m)}) \,,\; s^{(n)} \in \mathcal{L}_1^{(n)} \,,\, v^{(m)} \in \mathcal{L}_2^{(m)} \,,\; s_j = v_k \,\}$$

with weight $w$:

$$w(\, u^{(n+m-1)} \,) \;\; = \;\; w(s^{(n)}) \otimes w(v^{(m)}).$$

Single-tape intersection can intuitively be understood as a "composition" of the two languages such that tape $j$ of $L_1^{(n)}$ is intersected with tape $k$ of $L_2^{(m)}$. Tape $k$, which due to the intersection becomes equal to tape $j$, is then removed, and all other tapes of both languages are preserved without modification. For example, if one language contains the ordered pair <x,y> and another language contains the ordered pair <y,z>, then composing <x,y> and <y,z>, in that order, results in a language that contains the ordered pair <x,z>, whereas intersecting <x,y> and <y,z>, at tapes 2 and 1 respectively, results in the language that contains the ordered pair <x,y,z>.

Single-tape intersection is neither associative nor commutative, except for special cases. A first special case of single-tape intersection is the intersection of two acceptors (i.e., 1-tape automata) leading to an acceptor, which may be defined as:

$$A_1^{(1)} \cap A_2^{(1)} \;\; = \;\; A_1^{(1)} \underset{1,1}{\cap} A_2^{(1)} \;\; = \;\; \overline{\mathcal{P}}_2 \left( \mathcal{I}_{1,2}(\, A_1^{(1)} \times A_2^{(1)} \,) \right)$$

where the first special case of single-tape intersection has the language $L$ and weight $w$:

$$\mathcal{L} \left( A_1^{(1)} \cap A_2^{(1)} \right) \;\; = \;\; \{\, s \mid s \in \mathcal{L}(A_1) \,,\; s \in \mathcal{L}(A_2) \,\}$$

$$w(s) \;\; = \;\; w_{A_1}(s) \otimes w_{A_2}(s)$$

and where single-tape intersection has the same language:

$$\mathcal{L} \left( A_1^{(1)} \times A_2^{(1)} \right) \;\; = \;\; \{\, \langle s_1, s_2 \rangle \mid s_1 \in \mathcal{L}(A_1) \,,\; s_2 \in \mathcal{L}(A_2) \,\}$$

$$\mathcal{L} \left( \mathcal{I}_{1,2}(\, A_1^{(1)} \times A_2^{(1)} \,) \right) \;\; = \;\; \{\, \langle s, s \rangle \mid s \in \mathcal{L}(A_1) \,,\; s \in \mathcal{L}(A_2) \,\}$$

$$\mathcal{L} \left( \overline{\mathcal{P}}_2(\, \mathcal{I}_{1,2}(\, A_1^{(1)} \times A_2^{(1)} \,) \,) \right) \;\; = \;\; \{\, s \mid s \in \mathcal{L}(A_1) \,,\; s \in \mathcal{L}(A_2) \,\}$$

$$w(s) \;\; = \;\; w(\, \langle s, s \rangle \,) = w(\, \langle s_1, s_2 \rangle \,) \;\; = \;\; w_{A_1}(s) \otimes w_{A_2}(s)$$

A second special case of single-tape intersection is the composition of two transducers (i.e., 2-tape automata) leading to a transducer. The second special case of single-tape intersection requires an additional complementary projection and may be defined as:

$$A_1^{(2)} \diamond A_2^{(2)} \;=\; \overline{\mathcal{P}}_2(\, A_1^{(2)} \underset{2,1}{\cap} A_2^{(2)}\, ) \;=\; \overline{\mathcal{P}}_{2,3}\left( \mathcal{I}_{2,3}(\, A_1^{(2)} \times A_2^{(2)}\, ) \right).$$

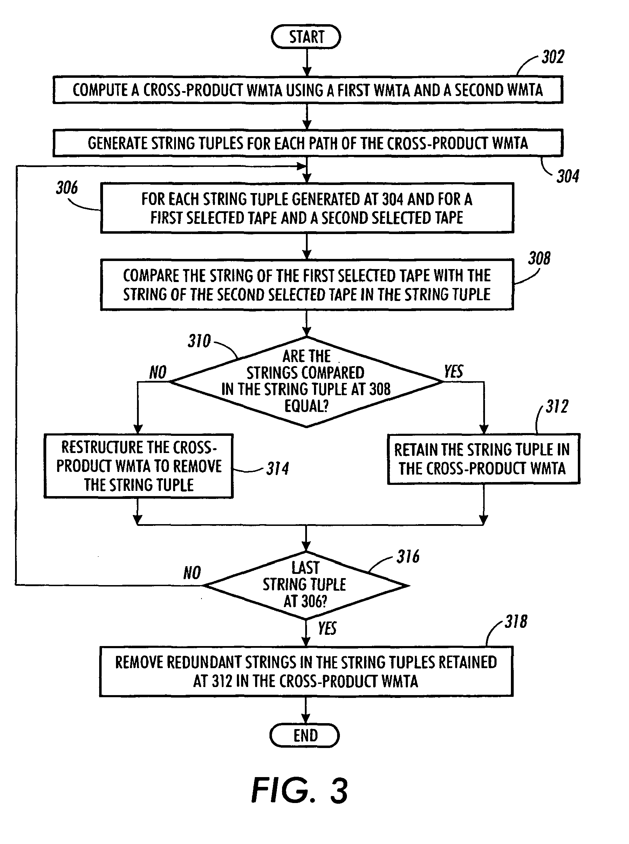

Figure 3 is a flow diagram that sets forth steps for performing a single-tape intersection operation of a first WMTA and a second WMTA. At 302, a cross-product WMTA is computed using the first WMTA and the second WMTA. At 304, a string tuple for each path of the cross-product WMTA is generated. At 306 and 316, for each string tuple generated at 304, the string of a first selected tape is compared with the string of a second selected tape at 308. If at 310, the strings compared at 308 are equal, then the corresponding string tuple is retained in the cross-product WMTA at 312; otherwise, the corresponding string tuple is restructured at 314. When strings of the last tuple have been compared at 316, redundant strings retained in the string tuples at 312 are removed in the cross-product WMTA at 318.

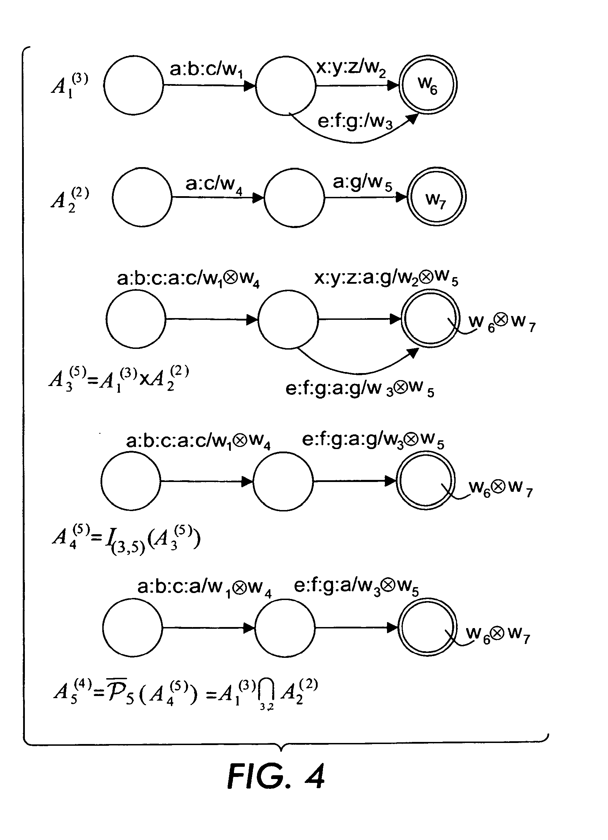

For example, Figure 4 presents two WMTAs $A_1^{(3)}$ (with string tuple <ax, by, cz> and weight $w_1 \otimes w_2$ and string tuple <ae, bf, cg> and weight $w_1 \otimes w_3$) and $A_2^{(2)}$ (with string tuple <aa, cg> and weight $w_4 \otimes w_5$) for illustrating a simple example of the single-tape intersection operation $A_1^{(3)} \underset{3,2}{\bigcap} A_2^{(2)}$ (where the final state of each automaton also has a weight). The resulting cross-product WMTA $A_3^{(5)}$ of the two WMTAs $A_1^{(3)}$ and $A_2^{(2)}$ results in the following two string tuples (see 302 Figure 3): <ax, by, cz, aa, cg> having weight $w_1 \otimes w_2 \otimes w_4 \otimes w_5$ and <ae, bf, cg, aa, cg> having weight $w_1 \otimes w_3 \otimes w_4 \otimes w_5$. In comparing tapes 3 and 5 of the cross-product WMTA $A_3^{(5)}$ (see 308 in Figure 3), the following strings are compared for each string tuple of the cross-product WMTA $A_3^{(5)}$, respectively: "cz" and "cg"; and "cg" and "cg".

In the example shown in Figure 4, one set of strings at the selected tapes 3 and 2 are equal, which results in the retention of the string tuple <ae, bf, cg, aa, cg> in the cross-product WMTA $A_3^{(5)}$ (see 312 in Figure 3). Also in the example, one set of strings at the selected tapes 3 and 5 in the cross-product WMTA $A_3^{(5)}$ are not equal, resulting in the restructuring of the cross-product WMTA to remove the string tuple <ax, by, cz, aa, cg> through auto-intersection as WMTA $A_4^{(5)} = I_{(3,5)}(\, A_3^{(5)}\, )$ (see 314 in Figure 3). Finally, redundant strings in the string tuple retained in the cross-product WMTA $A_4^{(5)}$ are removed through complementary projection $A_5^{(4)} = \overline{\mathcal{P}}(\, A_4^{(5)}\, )$ to result in the simplified string tuple <ae, bf, cg, aa> for the WMTA $A_5^{(4)}$ (see 318 in Figure 3).

**B.6 Multi-Tape Intersection**

Multi-tape intersection of two multi-tape languages, $L_1^{(n)}$ and $L_2^{(m)}$, uses $r$ tapes in each language, and intersects them pair-wise. In other words, multi-tape intersection is an operation that involves intersecting several tapes of a first MTA with the same number of tapes of a second MTA. Multi-tape intersection is a generalization of single-tape intersection, and is defined as:

$$\mathcal{L}_1^{(n)} \underset{\substack{j_1,k_1 \\ \cdots \\ j_r,k_r}}{\cap} \mathcal{L}_2^{(m)} \;=_{\text{def}}\; \overline{\mathcal{P}}_{n+k_1,\ldots,n+k_r}\left( \mathcal{I}_{j_r,n+k_r}(\, \cdots\, \mathcal{I}_{j_1,n+k_1}(\, \mathcal{L}_1^{(n)} \times \mathcal{L}_2^{(m)}\, ) \cdots\, ) \right)$$

The multi-tape intersection operation pairs each string tuple $s^{(n)} \in L_1^{(n)}$ with each string tuple $v^{(m)} \in L_2^{(m)}$ iff $s_{j_1} = v_{k_1}$ until $s_{j_r} = v_{k_r}$. The resulting language $L^{(n+m-r)}$ is defined as:

$$\mathcal{L}^{(n+m-r)} \;=\; \{\, u^{(n+m-r)} \mid u^{(n+m-r)} = \overline{\mathcal{P}}_{n+k_1,\ldots,n+k_r}(s^{(n)}{:}v^{(m)})\,,$$

$$s^{(n)} \in \mathcal{L}_1^{(n)}, v^{(m)} \in \mathcal{L}_2^{(m)}, \; s_{j_1} = v_{k_1}, \; \ldots, \; s_{j_r} = v_{k_r} \}$$

weight $w$:

$$w(\, u^{(n+m-r)}\,) \;\; = \;\; w(s^{(n)}) \otimes w(v^{(m)})\,.$$

All tapes $k_i$ of language $L_2^{(n_2)}$ that have directly participated in the intersection are afterwards equal to the tapes $j_i$ of $L_1^{(n_1)}$, and are removed. Multi-tape intersection is neither associative nor commutative (except for special cases).

**B.7 Transition Automata and Transition-Wise Processing**

A transition automaton $A(e)$ is defined herein as an automaton containing only one single transition $e$ that actually belongs to another automaton $A$. Any automaton operation is allowed to be performed on $A(e)$, which means that the operation is performed on one single transition of $A$ rather than on $A$. This can be thought of either as the operation being performed in place (i.e., inside $A$ on one single transition) or as the transition being extracted from $A$ and placed into a new automaton $A(e)$ that participates in an operation whose result is then placed back into $A$, at the original location of $e$.

The concept of transition automata allows a method to be defined where an automaton $A$ is transition-wise processed (i.e., each of its transitions is processed independently through a sequence of automaton operations). In the following example that illustrates the transition automata $A(e)$ being transition-wise processed, $e$ is one transition in a set of transitions $E$ of automata $A$:

```
1        for ∀e ∈ E do
2
```
$$\mathcal{A}(e) \leftarrow A_1^{(2)} \diamond \mathcal{A}(e) \diamond A_2^{(2)}$$
```
3        A(e) ← ... A(e) ...
```

**C. Methods For Performing MTA Operations**

This section sets forth methods for performing multi-tape operations for automata defined in section B, while referring to the variables and definitions in Table 1. Note that in Table 1 the following variables serve for assigning temporarily additional data to a state $q$: $\mu[q]$, $\nu[q]$, $\xi[q]$, $\vartheta[q]$ and $\chi[q]$.

**TABLE 1**

| | |
|---|---|
| $A_j = \langle \Sigma_j, \Theta_j, i_j, \Phi_j, E_j, \kappa_j \rangle$ | Specific (original) weighted automaton from which a new weighted automaton $A$ is constructed |
| $A = \langle \Sigma, Q, i, F, E, \kappa \rangle$ | New weighted automaton resulting from the construction |
| $\nu[q] = q_1$ | State $q_1$ of an original automaton $A_1$ assigned to a state $q$ of a new automaton $A$ |
| $\mu[q] = (q_1, q_2)$ | Pair of states $(q_1, q_2)$ of two ordinal automata, $A_1$ and $A_2$, assigned to a state q of a new automaton $A$ |
| $\psi[q] = \ddot{q}$ | Previous state $\ddot{q}$ in the new automaton $A$ on the same path as $q$ (back pointer) |
| $\vartheta[q] = (q_1, q_2, q_\varepsilon)$ | Triple of states $q_1$, $q_2$, $q_\varepsilon$ belonging to the original automata, $A_1$ and $A_2$. and to a simulated filter automaton, $A_\varepsilon$, respectively; assigned to a state $q$ of a new automaton $A$ |
| $\xi[q] = (s, u)$ | Pair of "leftover" substrings $(s, u)$ assigned to a state $q$ of a new automaton $A$ |
| $lcp(s, s')$ | Longest common prefix of the strings $s$ and $s'$ |
| $\ell_{j,k,\ldots}(x) = P_{j,k,\ldots}(\ell(x))$ | Short-hand notation for the projection of the label $x$ |
| $\delta(s, u) = \|s\|-\|u\|$ | Delay between two string (or leftover substrings $s$ and $v$ where $\|s\|$ is the length of substrings) $s$ and $u$, where $\|s\|$ is the length of string $s$ and $\|u\|$ is the length of string $u$. Example: $\delta(\xi[q])$ |

(continued)

| $\chi[q] = (\chi_1,\chi_2)$ | Pair of integers assigned to a state $q$, expressing the lengths of two strings $s$ and $u$ on different tape of the same path ending at $q$ |
|---|---|

**C.1 Cross-Product**

Generally, this section sets forth two alternate embodiments for performing the cross-product operation defined in section B-3, and more specifically for compiling the cross product of two WMTAs, $A_1^{(n)}$ and $A_2^{(m)}$.

The first embodiment pairs the label of each transition $e_1 \in E_1$ with $\varepsilon^{(m)}$ (producing $l(e_1) : \varepsilon^{(m)}$), and the label of each transition $e_2 \in E_2$ with $\varepsilon^{(n)}$ (producing $\varepsilon^{(n)} : l(e_2)$), and finally concatenates $A_1^{(n+m)}$ with $A_2^{(n+m)}$. This operation is referred to herein as "CrossPC $(A_1, A_2)$" where the suffix "PC" stands for "path concatenation" and can be expressed as:

$$\ell(\pi_1^{(n)} : \pi_2^{(m)}) = (\ell(e_{1,1}^{(n)}) : \varepsilon^{(m)}) \cdots (\ell(e_{1,\alpha}^{(n)}) : \varepsilon^{(m)}) \cdot (\varepsilon^{(n)} : \ell(e_{2,1}^{(m)})) \cdots (\varepsilon^{(n)} : \ell(e_{2,\beta}^{(m)})).$$

The second embodiment pairs each string tuple of $A_1^{(n)}$ with each string tuple of $A_2^{(m)}$, following the definition in section B-3. This embodiment in actuality pairs each path $\pi_1$ of $A_1^{(n)}$ with each path $\pi_2$ of $A_2^{(m)}$ transition-wise, and appends epsilon transitions (i.e., $\varepsilon$-transitions) to the shorter of two paired paths, so that both have equal length. This operation is referred to herein as "CrossPA $(A_1, A_2)$" where the suffix "PA" stands for "path alignment" and can be expressed as:

$$\ell(\pi_1^{(n)} : \pi_2^{(m)}) = (\ell(e_{1,1}^{(n)}) : \ell(e_{2,1}^{(m)})) \cdots (\ell(e_{1,\alpha}^{(n)}) : \ell(e_{2,\alpha}^{(m)})) \cdot (\varepsilon^{(n)} : \ell(e_{2,\alpha+1}^{(m)})) \cdots (\varepsilon^{(n)} : \ell(e_{2,\beta}^{(m)}))$$

for $\alpha < \beta$, and similarly otherwise.

**C.1.1 Conditions**

Both embodiments for performing the cross-product operation operate under the conditions that:

(A) the semirings of the two automata $A_1^{(n)}$ and $A_2^{(m)}$ are equal to: $\kappa_1 = \kappa_2$; and

(B) the common semiring $\kappa = \kappa_1 = \kappa_2$ is commutative (which holds in the case of CrossPA embodiment only) :

$$\forall w_1, w_2 \in \mathcal{K} : w_1 \otimes w_2 = w_2 \otimes w_1.$$

**C.1.2 Path Concatenation Method**

A (brute force) method for performing the cross-product operation in accordance with an embodiment, defined as "CrossPC()", with path concatenation "PC" may be described as follows in pseudocode:

```
CrossPC(A_1^{(n)}, A_2^{(m)}) → A :
1        A ← ⟨Σ_1 ∪ Σ_2, Q_1 ∪ Q_2, i_1, F_2, E_1 ∪ E_2, K_1⟩
2        for ∀e_1 ∈ E_1 do
3            ℓ(e_1) ← ℓ(e_1):ε^(μ)
4            for ∀e_2 ∈ E_2 do
5                ℓ(e_2) ← ε^(ν):ℓ(ε_2)
6            for ∀_q ∈ F_1 do
7                E ← E ∪ { ⟨q, ε^(ν+μ), Θ(θ), ι_2⟩ }
8                Q(q) ← 0̄
9        return A
```

The pseudocode set forth above for cross-product path concatenation (i.e., CrossPC()) starts with a WMTA $A$ that is equipped with the union of the alphabets (i.e., the union of the state sets of transducers $A_1$ and $A_2$). The initial state of $A$ equals that of $A_1$, its set of final states equals that of $A_2$, and its semiring equal those of $A_1$ and $A_2$ (see line 1). First, the labels of all transitions originally coming from $A_1$ are (post-) paired with $\varepsilon^{(m)}$-transitions, and the labels of all transitions originally coming from $A_2$ are (pre-) paired with $\varepsilon^{(n)}$-transitions. Subsequently, all final states of $A_1$ are connected with the initial state of $A_2$ through $\varepsilon^{(n+m)}$-transitions. As a result, each string n-tuple of $A_1$ will be physically followed by each string m-tuple of $A_2$. However, logically those string tuples will be paired since they are on different tapes.

It will be appreciated by those skilled in the art that the paths of the WMTA $A$ become longer in this embodiment than the other embodiment with path alignment. In addition, it will be appreciated that each transition of $A$ in this embodiment is partially labeled with an epsilon, which may increase the runtime of subsequent operations performed on $A$. Further it will be appreciated that this embodiment may be readily adapted to operate with non-weighted multi-tape automata (MTAs) by removing the weight Q($q$) from line 7 and the semiring $\kappa_1$ from line 1 and by replacing line 8 with "Final($q$)←false", in the pseudocode above for path concatenation (i.e., CrossPC()).

C.1.3 Path Alignment Method

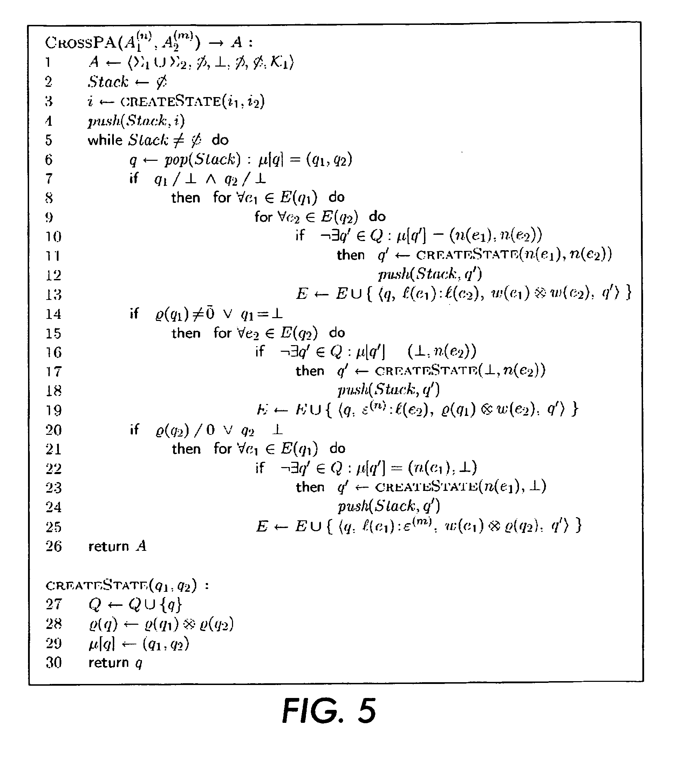

Figure 5 sets forth a second embodiment in pseudocode for performing the cross-product operation with path alignment "PA" (i.e., CrossPA()). In Figure 5, the final weight of an undefined state $q = \perp$ is assumed to be $\overline{1}$ : $Q_{(\perp)} = \overline{1}$. In the embodiment shown in Figure 5, the pseudocode starts with a WMTA $A$ whose alphabet is the union of the alphabets of $A_1$ and $A_2$, whose semiring equals those of $A_1$ and $A_2$, and that is otherwise empty (see line 1). First, the initial state $i$ of $A$ is created from the initial states $A_1$ and $A_2$ (at line 3), and $i$ is pushed onto the stack (at line 4) which was previously initialized (at line 2). While the stack is not empty, the states $q$ are popped from it to access the states $q_1$ and $q_2$ that are assigned to $q$ through $u[q]$ (see lines 5 and 6).

Further in the embodiment shown in Figure 5, if both $q_1$ and $q_2$ are defined (i.e., $\neq\perp$), each outgoing transition $e_1$ of $q_1$ is paired with each outgoing transition of $e_2$ of $q_2$ (see lines 7 to 9). Also (at line 13), a transition in $A$ is created whose label is the pair $l(e_1) : l(e_2)$ and whose target $q'$ corresponds to the tuple of targets $(n(e_1), n(e_2))$. If $q'$ does not exist yet, it is created and pushed onto the stack (see lines 10 to 12).

In addition in the embodiment shown in Figure 5 (at lines 14 and 15), if a final state $q_1$ (with $Q(q_1) \pm \overline{0}$) in $A_1$ is encountered, the path is followed beyond $q_1$ on an epsilon-transition that exists only locally (i.e., virtually) but not physically in $A_1$. The target of the resulting transition in $A$ corresponds to the tuple of targets $(n(e_1), n(e_2))$ with $n(e_1)$ being undefined ($=\perp$) because $e_1$ does not exist physically (see line 17). If a final state $q_2$ (with $Q(q_2)\neq \overline{0}$) in $A_2$ is encountered, it is processed similarly (see lines 20 to 25). It will be appreciated by those skilled in the art that this embodiment may be readily adapted to operate with non-weighted multi-tape automata (MTAs) by removing the weights from lines 13, 19, and 25, and the semiring $\kappa_1$ from line 1, and the and by replacing line 28 with "Final($q$)←Final($q_1$) $\wedge$ Final($q_2$)", in the pseudocode shown in Figure 5.

C.1.4 Complexity

The space complexity of the (brute-force) cross-product path concatenation embodiment described in section C.1.2 is $|Q_1| + |Q_2|$ (i.e., on the order of $O(n)$) and its running complexity is $|F_1|$. In contrast, the space complexity of the cross-product path alignment embodiment described in section C.1.3 is $(|Q_1| + 1) \cdot (|Q_2| + 1)$ (i.e., on the order of $O(n^2)$) and its running complexity is $(|E_1| + 1) \cdot (|E_2| + 1)$.

C.2 Auto-Intersection

This section describes two methods for performing the auto-intersection operation defined in section B.4.

C.2.1 Conditions Of First Method

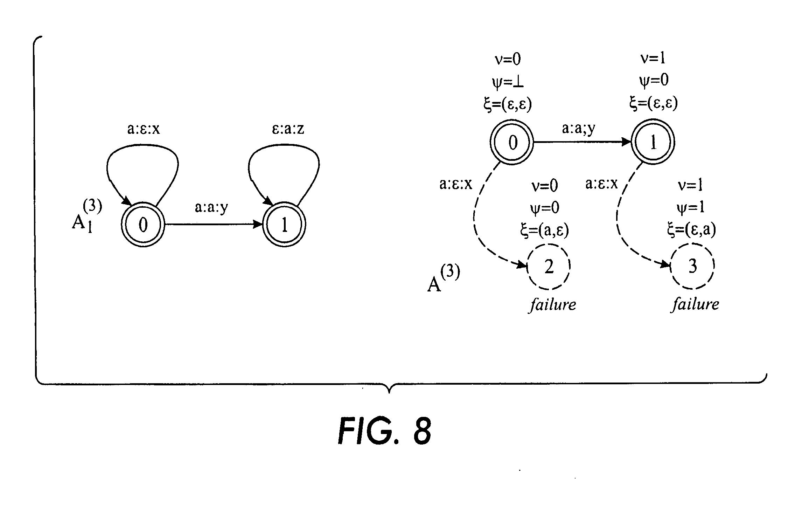

The method described for performing auto-intersection operation in this section operates under the condition that the original automaton $A_1^{(n)}$ does not contain cycles labeled only with an epsilon on one and not only with an epsilon on the other of the two tapes involved in the operation. If condition occurs the method will stop without producing a result, rather than attempting to create an infinite number of states. It is assumed this undesirable condition occurs rarely (if at all) in natural language processing applications (see for example Figure 8).

C.2.2 First Method

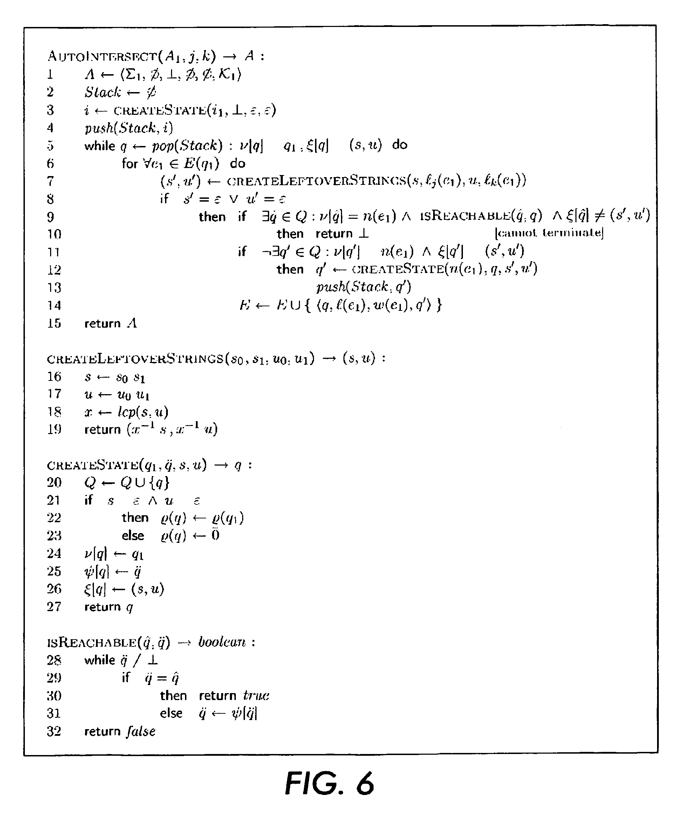

Figure 6 sets forth a first method in pseudocode for performing the auto-intersection operation (i.e., AutoIntersect ()). Line 1 of the pseudocode begins with a WMTA $A$ whose alphabet and semiring equal those of $A_1$ and that is otherwise empty. To each state $q$ that will be created in $A$ (see line 3), three variables are assigned: (i) $v[q]=q_1$ that indicates the corresponding state $q_1$ in $A_1$ (see line 24), (ii) $\psi[q]= \ddot{q}$ that indicates the previous state $\ddot{q}$ in $A$ on the current path (back pointer) (see line 25), and (iii) $\xi[q]=(s,u)$ that states the leftover string $s$ of tape $j$ (yet unmatched in tape $k$) and leftover string $u$ of tape $k$ (yet unmatched in tape $j$) (see line 26).

At lines 3-4 and 20-27, an initial state $i$ in $A$ is created and pushed onto the stack defined at line 2. As long as the stack is not empty, the states $q$ are popped from the stack and each of the outgoing transitions $e_1\in E(q)$ in $A$ with the same label and weight are followed (see line 5). To compile the leftover strings $\xi[q']=(s', u')$ of its target $q'=n(e)$ in $A$, the leftover strings $\xi[q]=(s,u)$ of its source $q=p(e)$ are concatenated with the $j$-th and $k$-th component of its label, $\ell_j$

($e_1$) and $\ell_k(e_1)$, and the longest common prefix of the resulting string $s \cdot \ell_j(e_1)$ and $u \cdot \ell_k(e_1)$ is removed (see lines 7 and 16-19).

If both leftover strings $s'$ and $u'$ of $q'$ are non-empty (i.e., # $\varepsilon$) then they are incompatible and the path that is being followed is invalid. In this case, the transition $e \in E(q)$ and its target $q'$ in $A$ are not constructed. If either $s'$ or $u'$ is empty (i.e., $=\varepsilon$), then the current path is valid (at least up to this point) (see line 8).

At line 9, a test is made to determine whether the process will not terminate, which is the case if a cycle in $A_1$ was traversed and the $\xi[\hat{q}]$ at the beginning of the cycle differs from the $\xi[n(e)]=(s',u')$ at its end. In this case the states $\hat{q}$ and $n(e)$ are not equivalent, and cannot be represented through one state in $A$, although they correspond to the same state $q_1$ in $A_1$. In order that the process does not traverse the cycle an infinite number of times and create a new state on each transversal, the process aborts at line 10.

At line 14 (if the process did not abort at line 10), a transition $e$ in $A$ is constructed. If its target $q'=n(e)$ does not exist yet, it is created and pushed onto the stack at lines 11-13. It will be appreciated by those skilled in the art that this embodiment may be readily adapted to operate with non-weighted multi-tape automata (MTAs) by removing the weight $w(e_1)$ from line 14 and the semiring $\kappa_1$ from line 1, and by replacing line 22 with "Final($q$)←Final($q_1$)" and line 23 with "Final($q$)←false", in the pseudocode shown in Figure 6.

**C.2.3 Example Of First Method**

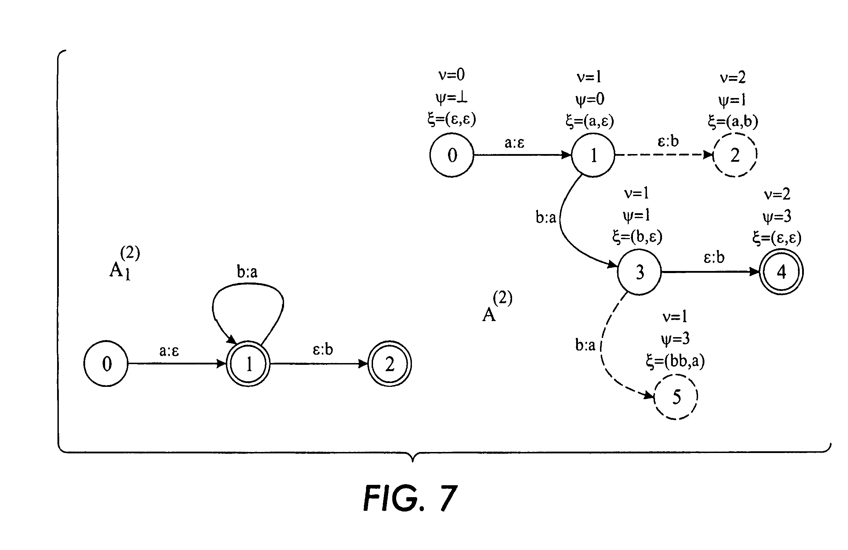

Figure 7 illustrates an example of the first method for performing the auto-intersection operation shown in Figure 6. In the example shown in Figure 7, the language of is the infinite set of string tuples <$ab^{*1}$, $a^{*1}b$>. Only one of those tuples, namely <$ab$, $ab$>, is in the language of the auto-intersection with $A^{(2)}= I_{1,2}(A_1^{(2)})$ because all other tuples contain different strings on tapes 1 and 2. In Figure 7, weights of each WMTA are omitted and dashed states and transitions are not constructed.

The method described above in section C.2.2 builds first the initial state 0 of $A^{(2)}$ with $\nu[0]=0$, $\psi[0]=1$, and $\xi[0]=(\varepsilon,\varepsilon)$. Then the only outgoing transition of the state referenced by $\nu[0]$ is selected, which is labeled $a{:}\varepsilon$, and the leftover strings of its target, state 1, is compiled by concatenating $\xi[0]=(\varepsilon,\varepsilon)$ with the label $a{:}\varepsilon$. This gives first ($a,\varepsilon$) and then, after removal of the longest comment prefix ($\varepsilon$ in this case), $\xi[1]=(a,\varepsilon)$. State 1 is created because $\xi[1]$ meets the constrains defined in the method. It is assigned $\nu[1]=1$, because it corresponds to state 1 in $A_1$, $\psi[1]=0$, because it is (at present) reached from state 0 in $A$, and $\xi[1]=(a,\varepsilon)$. State 1 in A is not final (unlike state 1 in $A_1$) because $\xi[1]\neq(\varepsilon,\varepsilon)$.

The remaining strings of state 2 in A result from $\xi[1]=(a,\varepsilon)$ and the transition label $\varepsilon{:}b$, and are $\xi[2]=(a,b)$. State 2 and its incoming transition are not created because $\xi[2]$ does not meet the defined constraints. All other states and transitions are similarly constructed.

Figure 8 illustrates an example where the first method for performing the auto-intersection operation shown in Figure 6 fails to construct the auto-intersection whose language, <$a^{*1}a$, $aa^{*1}$, $x^{*1}yz^{*1}$>, and is actually not finite-state (see conditions in section C.2.1). The failure condition is met at states 2 and 3 of the new automaton A. In Figure 8, weights of each WMTA are omitted and dashed states and transitions are not constructed.

**C.2.4 Conditions Of Second Method**

The second method unlike the first method has no conditions. In accordance with the second method for performing auto-intersection, the second method detects whether the auto-intersection of a given WMTA $A_1^{(n)}$ is regular (i.e., whether it can be represented as an automaton). If it is found to be regular, the second method creates a WMTA $A = I_{j,k}(A_1^{(n)})$; otherwise if it is found not to be regular and the complete result cannot be represented by an automaton, the second method creates the automaton $A \subset I_{j,k}(A_1^{(n)})$, which is a partial result.

Briefly, the second method performs auto-intersection by assigning leftover-strings to states using variable $\xi[q]=(s,u)$ and makes use of the concept of delay using variable $\delta(s,u)$, which are both defined in Table 1. The variable $\chi[q]$ defines a pair of integers assigned to a state $q$, which expresses the lengths of two strings $s$ and $u$ on different tape of the same path in a WMTA ending at $q$. The concept of delay provides that given a path in a WMTA, the delay of its states $q$ is the difference of lengths of the strings on the tapes $j$ and $k$ up to $q$. It is expressed as the function $\delta(s,u) = |s| - |u|$, where $|s|$ is the length of string $s$ and $|u|$ is the length of string $u$.

**C.2.5 Second Method**

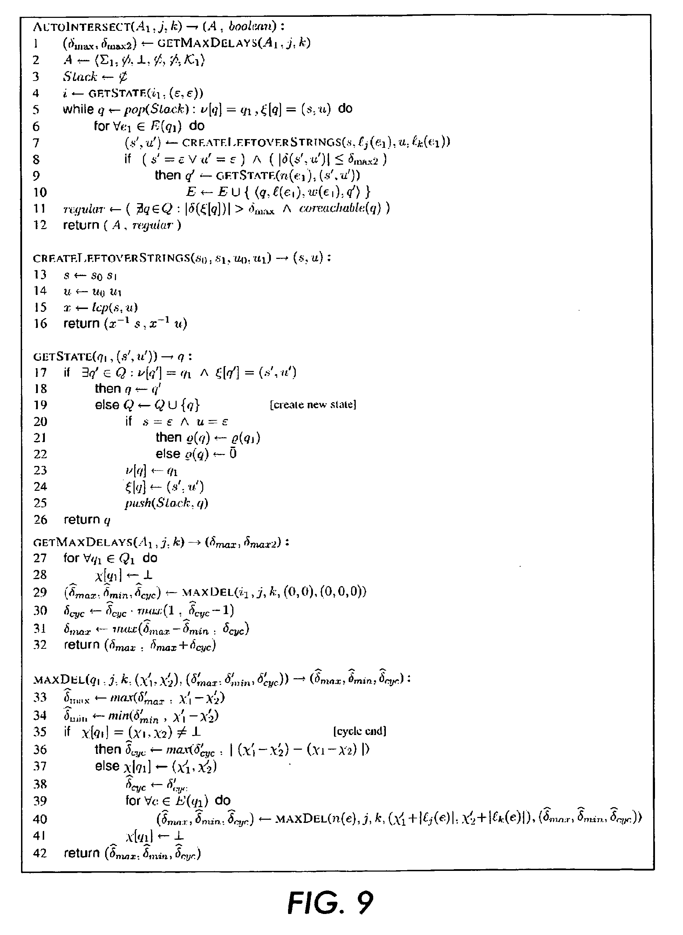

Figure 9 sets forth the second method in pseudocode for performing the auto-intersection operation (i.e., AutoIntersect()). The method is based on the observation that if the auto-intersection $A^{(n)} = I_{j,k}(A_1^{(n)})$ of a WMTA $A_1^{(n)}$ is regular, the delay will not exceed a limit $\delta_{max}$ at any state q of $A^{(n)}$. If it is not regular, the delay will exceed any limit, but it is possible to construct a regular part, $A_p^{(n)}$, of the auto-intersection within the limit of $\delta_{max}$ and a larger

regular part, $A_{p2}^{(n)}$, within a larger limit $\delta_{max2}$ (i.e., $A_p^{(n)} \subset A_{p2}^{(n)} \subset I_{j,k}(A_1^{(n)})$).

By way of overview, the second method set forth in Figure 9 and described in detail below involves three operations. First, two limits are computed corresponding to delays $\delta_{max}$ and $\delta_{max2}$ of the auto-intersection (i.e., line 1). The first delay $\delta_{max}$ is computed by traversing the input automaton and measuring the delays along all its paths. The second delay is computed similar to the first delay while traversing an additional cycle of the input automaton. Next, the auto-intersection of the automaton is constructed using the delay $\delta_{max2}$ (i.e., lines 2-10, where the second limit serves to delimit construction of the automaton). Finally, the constructed automaton is tested for regularity using the delay $\delta_{max}$ (i.e., line 11, where the first limit serves to determine whether the auto-intersection is regular).

**C.2.5.A Compile Limits**

In Figure 9, a maximal delay, $\delta_{max}$, is compiled. The maximal delay, $\delta_{max}$, can occur at any point between the two strings $\ell_j(\pi)$ and $\ell_k(\pi)$ on any path $\pi$ of $I_{j,k}(A_1^{(n)})$ if it is regular. Let $R(A_1^{(2)}) = (\{\langle aa, \varepsilon \rangle\} \cup \{\langle \varepsilon, aaa \rangle\})^*$, encoded by two cycles (as provided at lines 1 and 27-42), where $R(A^{(n)})$ is the n-tape relation of $A^{(n)}$. To obtain a match between $\ell_1(\pi)$ and $\ell_2(\pi)$ in $A^{(2)} = I_{1,2}(A_1^{(2)})$, the first cycle must be traversed three times and the second cycle two times, allowing for any permutation: $A^{(2)} = (\langle aa, \varepsilon \rangle^3 \langle \varepsilon, aaa \rangle^2 \cup \langle aa, \varepsilon \rangle^2 \langle \varepsilon, aaa \rangle^2 \langle aa, \varepsilon \rangle^1 ... )^*$. This illustrates that in a match between any two cycles of $A_1^{(n)}$, the absolute value of the delay does not exceed $\delta_{cyc} = \hat{\delta}_{cyc} \cdot max\,(1, \delta_{cyc}-1)$, with $\hat{\delta}_{cyc}$ being the maximal absolute value of the delay of any cycle (as provided at line 30). For any other kind of match, the difference between the maximal and the minimal delay, $\hat{\delta}_{max}$ and $\hat{\delta}_{min}$, encountered at any (cyclic or acyclic) path $\pi$ of $A_1^{(n)}$ is taken into account. Therefore, the absolute value of the delay in $A^{(n)}$ does not exceed $\delta_{max} = max\,(\hat{\delta}_{max} - \hat{\delta}_{min}, \delta_{cyc})$ if $I_{j,k}(A_1^{(n)})$ is regular (as provided at line 31). If it is non-regular, then $\delta_{max}$ will limit $A^{(n)}$ to a regular subset of the auto-intersection, $A^{(n)} \subset I_{j,k}(A_1^{(n)})$.

Next, a second limit, $\delta_{max2}$, is compiled that permits, in case of non-regularity, to construct a larger regular subset $A^{(n)} \subset I_{j,k}(A_1^{(n)})$ than $\delta_{max}$ does. Non-regularity can only result from matching cycles in $A_1^{(n)}$. To obtain a larger subset of $I_{j,k}(A_1^{(n)})$, the cycles of $A_1^{(n)}$ must be unrolled further until one more match between two cycles is reached. Therefore, $\delta_{max2} = \delta_{max} + \delta_{cyc}$ (as provided at line 32).

**C.2.5.B Construct Auto-Intersection**

Construction starts with a WMTA A whose alphabet and semiring equal those of $A_1$ and that is otherwise empty (as provided at line 2). To each state $q$ that will be created in WMTA $A$, two variables are assigned: (i) $v[q]=q_1$ indicating the corresponding state $q_1$ in $A_1$; and (ii) $\xi[q]=(s,u)$, which sets forth the leftover string s of tape $j$ (yet unmatched in tape $k$) and the leftover string $u$ of tape $k$ (yet unmatched in tape $j$).

Subsequently, an initial state $i$ in $A$ is created and pushed onto a stack (as provided at lines 4 and 17-26). As long as the stack is not empty, states $q$ are taken from it and each of the outgoing transitions $e_1 \in E(q_1)$ of the corresponding state $q_1=v[q]$ in $A_1$ are followed (as provided in lines 5 and 6). A transition $e_1$ in $A_1$ is represented as $e \in E(q)$ in $A$, with the same label and weight. To compile the leftover strings $\xi[q']=(s', u')$ of its target $q'=n(e)$ in $A$, the leftover strings $\xi[q] =(s, u)$ of its source $q=p(e)$ are concatenated with the $j$-th and $k$-th component of its label, $\ell_j(e_1)$ and $\ell_k(e_1)$, and the longest common prefix of the resulting strings $s \cdot \ell_j(e_1)$ and $u \cdot \ell_k(e_1)$ is removed (as provided in lines 7 and 13-16).

If both leftover strings $s'$ and $u'$ of $q'$ are non-empty (i.e., $\neq \varepsilon$) then they are incompatible and the path that is being followed is invalid. If either $s'$ or $u'$ is empty $\varepsilon$ (i.e., $=\varepsilon$) then the current path is valid (at least up to this point) (as provided in line 8). Only in this case and only if the delay between $s'$ and $u'$ does not exceed $\delta_{max2}$, a transition $e$ in $A$ is constructed corresponding to $e_1$ in $A_1$ (as provided in line 10). If its target $q'=n(e)$ does not exist yet, it is created and pushed onto the stack (as provided in lines 9 and 17-26). The infinite unrolling of cycles is prevented by $\delta_{max2}$.

**C.2.5.C Test Regularity Of Auto-Intersection**

Finally, the constructed auto-intersection of the WMTA $A$ is tested for regularity. From the above discussion of $\delta_{max}$ and $\delta_{max2}$ it follows that if $I_{j,k}(A_1^{(n)})$ is regular then none of the states that are both reachable and coreachable have $|\delta(\xi[q])| > \delta_{max}$. Further, if $I_{j,k}(A_1^{(n)})$ is non-regular then a WMTA $A^{(n)}$ built having a $\delta_{max2}$, is bigger than a WMTA $A^{(n)}$ built having $\delta_{max}$, and hence has states with $|\delta(\xi[q])| > \delta_{max}$ that are both reachable and coreachable. Since all states of $A^{(n)}$ are reachable, due to the manner in which the WMTA A is constructed, it is sufficient to test for their coreachability (as provided at line 11) to know whether the WMTA $A$ is regular (i.e., the delay of WMTA $A^{(n)}$ will not exceed a limit $\delta$ max at any state $q$ of $A^{(n)}$).

**C.2.6 Examples Of Second Method**

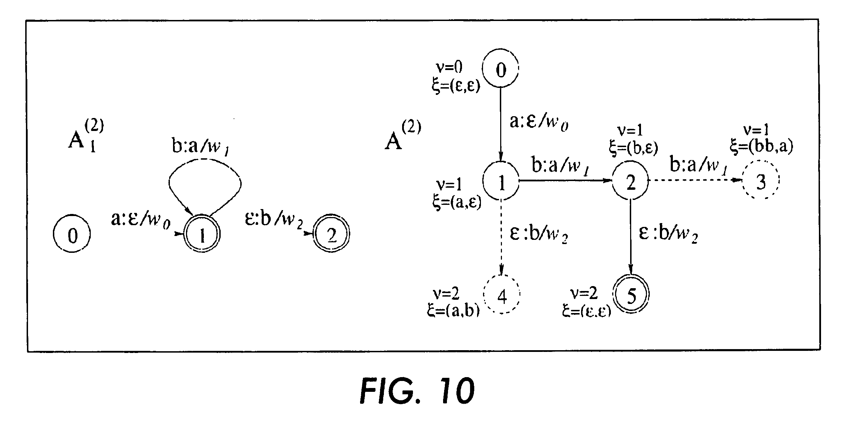

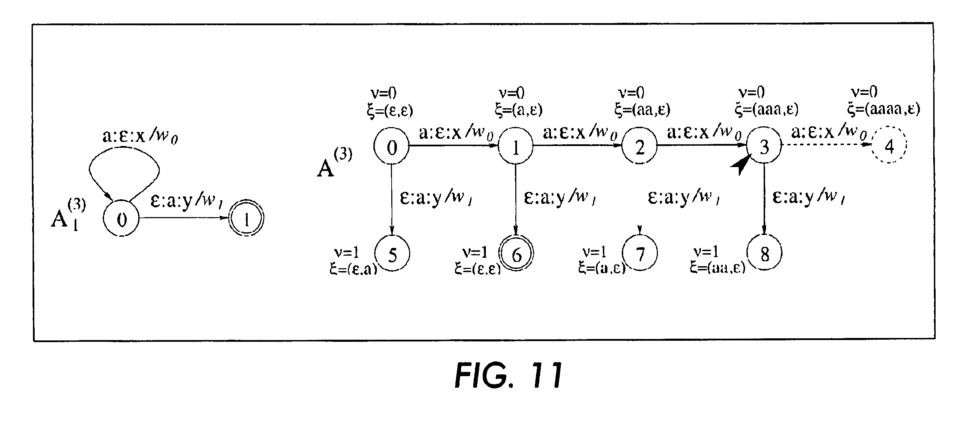

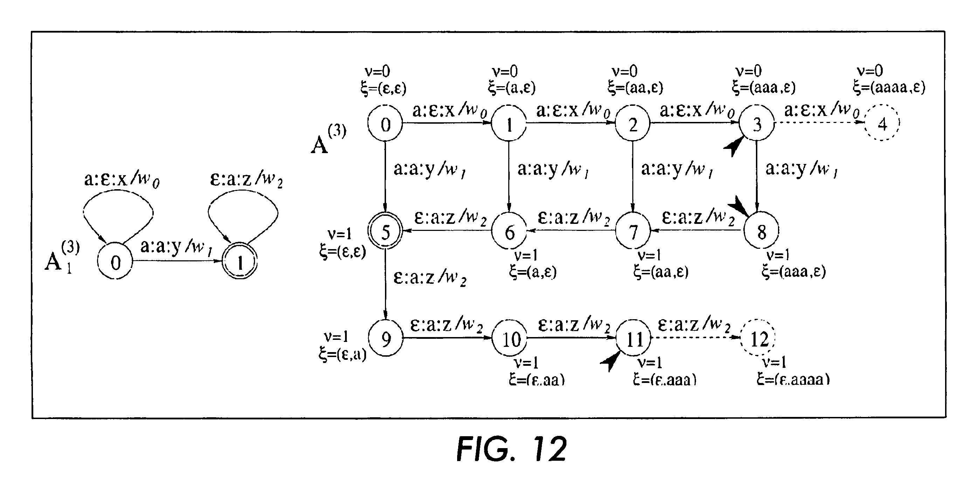

Figures 10 and 11 each present two different automata for illustrating the method for performing the auto-intersection operation set forth in Figure 9 which results in a WMTA $A^{(n)}$ that is regular. In contrast, Figure 12 presents two automata for illustrating an example of the method for performing the auto-intersection operation set forth in Figure 9 which results in a WMTA $A^{(n)}$ that is not regular. In the Figures 10-12, the dashed portions are not constructed by the method set forth in Figure 9, and the states $q$ in the Figures identified with the arrow "≻" have delay such that $|\delta(\xi[q])| > \delta_{max}$.

Figure 10 illustrates the WMTA $A_1^{(2)}$ and its auto-intersection $A^{(2)}$. In Figure 10, the WMTA $A_1^{(2)}$ is the infinite set of string tuples $\{\langle ab^k, a^k b\rangle \mid k \in N\}$ (where N is the set of natural numbers). Only one of those tuples, namely $\langle ab, ab\rangle$, is in the relation of the auto-intersection $A^{(2)} = I_{1,2}(A_1^{(2)})$ because aii other tuples contain different strings on tape 1 and tape 2. In accordance with the method for performing the auto-intersection operation set forth in Figure 9, the following four steps are performed (namely, at (1) the limits are computed, at (2) - (3) the auto-intersection is computed, and at (3) the auto-intersection is tested for regularity):

(1) $\qquad \delta_{max} = \delta_{max2} = 1$

(2)
$$\mathcal{R}(A_1^{(2)}) = \{\langle ab^k, a^k b\rangle \mid k \in \mathbb{N}\}$$

(3)
$$\mathcal{I}_{1,2}(\mathcal{R}(A_1^{(2)})) = \mathcal{R}(A^{(2)}) = \{\langle ab^1, a^1 b\rangle\}$$

(4) $\qquad \nexists q \in Q : |\delta(\xi[q])| > \delta_{max} \rightarrow regular$

Figure 11 illustrates the WMTA $A_1^{(3)}$ and its auto-intersection $A^{(3)} = I_{1,2}(A_1^{(3)})$, where the state 3 of $A^{(2)}$ in Figure 11 identified with the arrow "≻" has a delay such that $|\delta(\xi[q])| > \delta_{max}$. In accordance with the method for performing the auto-intersection operation set forth in Figure 9, the following four steps are performed (namely, at (1) - (2) the limits are computed, at (3) - (4) the auto-intersection is computed, and at (5) the auto-intersection is tested for regularity):

(1) $\qquad \delta_{max} = 2$

(2) $\qquad \delta_{max2} = 3$

(3)
$$\mathcal{R}(A_1^{(3)}) = \{\langle a^k, a, x^k y\rangle \mid k \in \mathbb{N}\}$$

(4)
$$\mathcal{I}_{1,2}(\mathcal{R}(A_1^{(3)})) = \mathcal{R}(A^{(3)}) = \{\langle a^1, a, x^1 y\rangle\}$$

(5) $\qquad \nexists q \in Q : |\delta(\xi[q])| > \delta_{max} \wedge coreachable(\text{q}) \rightarrow regular$

Figure 12 illustrates the VIMTA **WMTA** $A_1^{(3)}$ and its auto-intersection $A^{(3)} = I_{1,2}(A_1^{(3)})$, where the states 3, 8, and 11 of $A^{(2)}$ in Figure12 identified with the arrow "≻" have a delay such that $|\delta(\xi[q])| > \delta_{max}$. In accordance with the method for performing the auto-intersection operation set forth in Figure 9, the following four steps are performed (namely, at (1) - (2) the limits are computed, at (3) - (5) the auto-intersection is computed, and at (6) the auto-intersection is tested for regularity):

(1) $\qquad \delta_{max} = 2$

(2) $\qquad \delta_{max2} = 3$

(3)
$$\mathcal{R}(A_1^{(3)}) = \{\langle a^k a, aa^h, x^k y z^h\rangle \mid k, h \in \mathbb{N}\}$$

(4)
$$\mathcal{I}_{1,2}(\mathcal{R}(A_1^{(3)})) = \{\langle a^k a, aa^k, x^k y z^k\rangle \mid k \in \mathbb{N}\}$$

(continued)

$$(5) \qquad \mathcal{I}_{1,2}(\mathcal{R}(A_1^{(3)})) \supset \mathcal{R}(A^{(3)}) \quad = \quad \{\langle a^k a, a a^k, x^k y z^k \rangle \mid k \in [\![0,3]\!]\}$$

$$(6) \qquad \exists q \in Q : |\delta(\xi[q])| > \delta_{\max} \wedge coreachable(q) \rightarrow non\text{-}regular$$

**C.3 Single-Tape Intersection**

This section sets forth two alternate examples for performing, in one step, the single-tape intersection operation of two WMTAs $A_1^{(n)}$ and $A_2^{(m)}$ defined in section B.5 above. Instead of first building the cross-product, $A_1^{(n)} \times A_2^{(m)}$, and then deleting most of its paths by the auto-intersection, $I_{j,n+k}()$ operation defined in section B.4as claimed in the present invention, both examples construct only the useful part of the cross-product. However, it will be understood by those skilled in the art that an alternate example follows the definition and performs single-tape intersection in multiple steps.

The first example is a method for performing single-tape intersection similar to known methods for performing composition, and is not adapted to handle WMTAs that contain epsilons on the intersected tapes, $j$ and $k$. The first example is referred to herein as IntersectCross($A_1$, $A_2$, $j$, $k$), which is defined as:

$$Inter sectCross(A_1, A_2, j, k) \quad = \quad \mathcal{I}_{j,n+k}(\, A_1^{(n)} \times A_2^{(m)} \,)$$

$$A_1^{(n)} \underset{j,k}{\cap} A_2^{(m)} \quad = \quad \overline{\mathcal{P}}_{n+k}(\, Inter sectCross(A_1, A_2, j, k) \,)$$

It will be appreciated by those skilled in the art that the complementary projection, $\overline{P}_{n+k}()$, operation defined in section B.2 may be integrated into the first embodiment in order to avoid an additional pass. However, it is kept separate from IntersectCross() because IntersectCross() may serve also as a building block of another operation where the complementary projection operation must be postponed (e.g., multi-tape intersection).

The second example simulates the behavior of an epsilon-filter transducer for composing transducers with epsilon-transitions that is disclosed by Mohri, Pereira, and Riley in "A rational design for a weighted finite-state transducers", published in Lecture Notes in Computer Science, 1436:144-158, 1998 and hereinafter referred to as "Mohri's Epsilon-Filter Publication". The second example is referred to herein as IntersectCrossEps($A_1$, $A_2$, $j$, $k$), where the suffix "Eps" expresses its suitability for WMTAs with epsilons on the intersected tapes, $j$ and $k$.

Similar to the first example, it will be appreciated by those skilled in the art that the complementary projection, $\overline{P}_{n+k}()$, operation defined in section B.2 may be integrated into the second example in order to avoid an additional pass. However, it is kept separate from IntersectCrossEps() because IntersectCrossEps() may serve also as a building block of other operations where the complementary projection operation must be postponed or extended (e.g., classical composition and multi-tape intersection).

**C.3.1 Conditions**

Both examples for performing the single-tape intersection operation operate under the conditions that:

(A) the semirings of the two automata $A_1^{(n_1)}$ and $A_2^{(n_2)}$ equal to: $\kappa_1 = \kappa_2$;

(B) the common semiring $\kappa = \kappa_1 = \kappa_2$ is commutative:

$$\forall w_1, w_2 \in \mathcal{K} : w_1 \otimes w_2 = w_2 \otimes w_1 \;;$$

(C) For IntersectCross(): Neither of the two intersected tapes contains $\varepsilon$:

$$(\neg \exists e_1 \in E_1 : \ell_j(e_1) = \varepsilon) \wedge (\neg \exists e_2 \in E_2 : \ell_k(e_2) = \varepsilon)_{\textbf{.}}$$

**C.3.2 First Example**

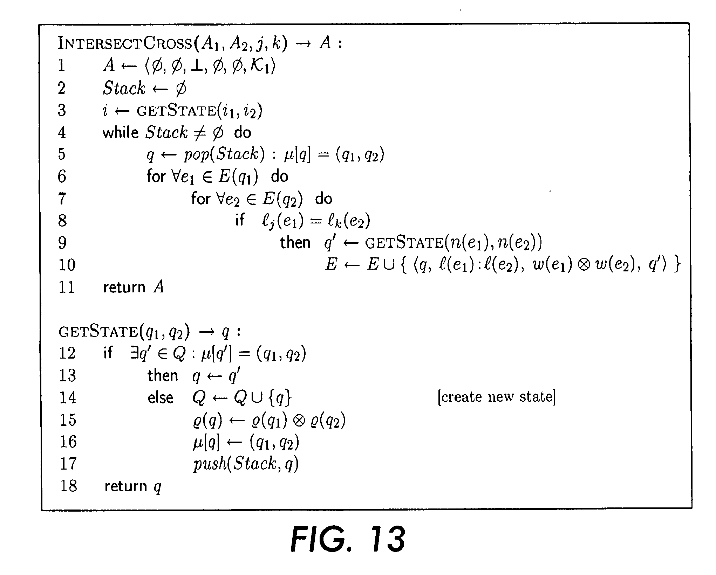

Figure 13 sets forth a method in pseudocode of the first example for performing the single-tape intersection operation (i.e., $A$ = IntersectCross($A_1$, $A_2$, $j$, $k$)). Line 1 begins with a WMTA A whose semiring equals those of $A_1$ and $A_2$ and that is otherwise empty. At lines 3 and 12-18, the initial state $i$ of the WMTA A is created from the initial states $A_1$ and $A_2$ and pushed onto the stack initialized at line 2. While the stack is not empty, the states $q$ are popped from it and the states $q_1$ and $q_2$ are accessed that are assigned to $q$ through $\mu[q]$ at lines 4 and 5.

At lines 6 and 7, each outgoing transition $e_1$ of $q_1$ is intersected with outgoing transitions $e_2$ of $q_2$. This succeeds at line 8 only if the $j$-th labeled component of $e_1$ equals the $k$-th labeled component of $e_2$, where $j$ and $k$ are the two intersected tapes of $A_1$ and $A_2$, respectively. Only if it succeeds at line 8 will a transition be created at line 10 for A whose label results from pairing $\ell(e_1)$ with $\ell(e_2)$ and whose target $q'$ corresponds with the pair of targets ($n(e_1)$, $n(e_2)$). If $q'$ does not exist yet, it is created and pushed onto the stack at lines 9 and 12-18.

It will be appreciated by those skilled in the art that this example may be readily adapted to operate with non-weighted multi-tape automata (MTAs) by removing the weights from line 10 and the semiring $\kappa_1$ from line 1, and by replacing line 15 with "Final($q$)←Final($q_1$) $\wedge$ Final($q_2$)" in the pseudocode shown in Figure 13.

**C.3.3 Mohri's Epsilon-Filter**

The second example for performing the single-tape intersection operation makes use of an epsilon-filter transducer similar to its use in the composition of two transducers with an epsilon-transition that is described in by Mohri et al. in Mohri's Epsilon-Filter Publication. This section describes the use of Mohri's epsilon-filter by simulating its use.

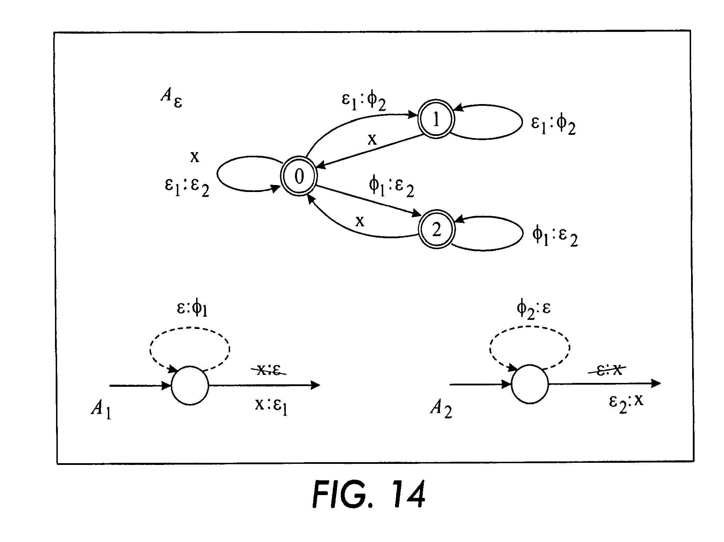

Figure 14 illustrates Mohri's epsilon-filter $A_\varepsilon$ and two transducers $A_1$ and $A_2$. The transducers $A_1$ and $A_2$ are pre-processed for filtered composition (where x=¬{$\Phi_1$, $\Phi_2$, $\varepsilon_1$, $\varepsilon_2$}) and each $\varepsilon$ in tape 2 of $A_1^{(2)}$ is replaced by an $\varepsilon_1$ and each $\varepsilon$ in tape 1 of $A_2^{(2)}$ by an $\varepsilon_2$. In addition, a looping transition labeled with $\varepsilon:\Phi_1$ is added to each state of $A_1^{(2)}$, and a loop labeled with $\Phi_2:\varepsilon$ to each state of $A_2^{(2)}$. The pre-processed transducers are then composed with the filter $A_\varepsilon^{(2)}$ in between: $A_1 \Diamond A_\varepsilon \Diamond A_2$. The filter controls how epsilon-transitions are composed along each pair of paths in $A_1$ and $A_2$, respectively. As long as there are equal symbols ($\varepsilon$ or not) on the two paths, they are composed with each other, and the state does not change in $A_\varepsilon$ from state zero. If a sequence of $\varepsilon$ in $A_1$ but not in $A_2$ is encountered, the state advances in $A_1$, and the state does not change in $A_2$ from the state shown and in $A_\varepsilon$ from state 1. If a sequence of $\varepsilon$ in $A_2$ but not in $A_1$ is encountered, the state advances in $A_2$, and the state does not change in $A_1$ from the state shown and in $A_\varepsilon$ from state 2.

**C.3.4 Second Example**

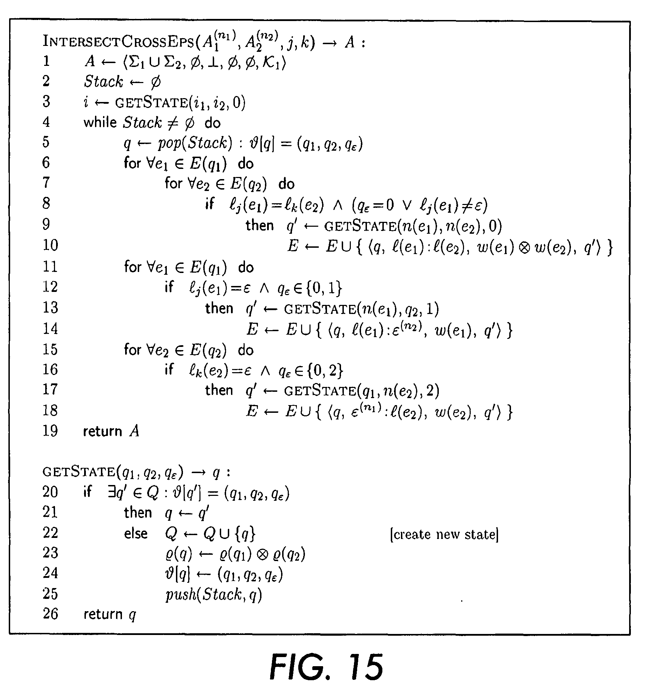

Figure 15 sets forth a method in pseudocode of the second example for performing the single-tape intersection operation (i.e., $A$ = IntersectCrossEps($A_1$, $A_2$, $j$, $k$)). Unlike the example set forth in section C.3.2 which builds the cross-product, $A_1 \times A_2$, and then deletes some of its paths by auto intersection, $I_{j,n+k}()$, this simulates the behavior of Mohri's epsilon-filter transducer described in section C.3.3 without Mohri's epsilon-filter transducer being present by adding an attribute at each state of the resulting WMTA $A$, thereby allowing only the useful parts of the cross-product to be constructed.

More specifically, in Figure 15, line 1 begins with a WMTA A whose alphabet is the union of the alphabets of transducers $A_1$ and $A_2$, whose semiring equals those of $A_1$ and $A_2$, and that is otherwise empty. At lines 3 and 20-26, the initial state $i$ of A is created from the states of $A_1$, $A_2$, and $A_\varepsilon$, and the initial state $i$ is pushed onto the stack initialized at line 2. While the stack is not empty, states $q$ are popped from it and the states $q_1$, $q_2$, and $q_\varepsilon$ that are assigned to states $q$ through $\vartheta[q]$ at lines 4-5.

At lines 6-7, each outgoing transition $e_1$ of state $q_1$ is intersected with each outgoing transition $e_2$ of state $q_2$. This succeeds at line 8 only if the $j$-th labeled component of $e_1$ equals the $k$-th labeled component of $e_2$, where $j$ and $k$ are the two intersected tapes of $A_1$ and $A_2$, respectively, and if the corresponding transition in $A_\varepsilon$ has target zero. Only if it succeeds at line 8 then at line 10, a transition in A is created (from the current source state) whose label results from pairing $\ell(e_1)$ with $\ell(e_2)$ and whose target state $q'$ corresponds with the triple of targets ($n(e_1)$, $n(e_2)$, 0). If state $q'$ does not exist yet, it is created and pushed onto the stack at lines 20-26.

Subsequently, all epsilon-transitions are handled in $A_1$ at lines 11-14 and in $A_2$ at lines 15-18. If an epsilon is encountered in $A_1$ and the automaton $A_\varepsilon$ is in state 0 or in state 1, the current state advances in $A_1$, does not change in $A_2$, and advances to state 1 in $A_\varepsilon$. At lines 11-14, a transition in A is therefore created whose target corresponds to the triple ($n(e_1)$, $q_2$, 1). Corresponding actions take place at lines 15-18 if an epsilon is encountered in $A_2$.

It will be appreciated by those skilled in the art that this example may be readily adapted to operate with non-weighted multi-tape automata (MTAs) by removing the weights from lines 10, 14, and 18 and the semiring $K_1$ from line 1, and by replacing line 23 with "Final($q$)←Final($q_1$) $\wedge$ Final($q_2$)" in the pseudocode shown in Figure 15.

It will further be appreciated by those skilled in the art that the example shown in Figure 15 for performing single-tape intersection of transducers $A_1$ and $A_2$ may be readily adapted to permit the composition of a first tape of the

automata $A_1$ and a second tape of the automata $A_2$ while retaining one of the first and the second tapes and all other tapes of both transducers at the transitions where the tapes intersect by revising the labels at each transition E created at lines 10, 14, and 18 to remove one component (i.e., removing either the first tape or the second tape to eliminate redundant paths through complementary projection).

In addition it will be appreciated by those skilled in the art that the example set forth in Figure 15 may be readily adapted to perform a classical-composition operation where both the first tape of the automata $A_1$ and the second tape of the automata $A_2$ are removed while retaining all other tapes of both transducers at the transitions where the tapes intersect by revising the labels at each transition E created at lines 10, 14, and 18 to remove both components (i.e., removing both the first tape and the second tape).

**C.3.5 Complexity**

The worst-case complexity of both the first example and the second example for carrying out the a single-tape intersection is $|E_1| \cdot |E_2|$ in space and runtime (i.e., on the order of $O(n^2)$). The complexity of the second example is only linearly greater than that of the first, which may be significant for large WMTAs.

**C.4 Multi-Tape Intersection**

This section sets forth two embodiments for performing the multi-tape intersection operation of two WMTAs $A_1^{(n)}$ and $A_2^{(m)}$ defined in section B.6. The first embodiment is referred to herein as Intersectl ($A_1^{(n)}$ and $A_2^{(m)}, j_1 \ldots j_r, k_1 \ldots k_r)$, $j_1 \ldots j_r, k_1 \ldots k_r$), follows the definition of multi-tape intersection while performing operations for cross-product, auto-intersection, and complementary projection. The second embodiment, which is more efficient, is referred to herein as Intersect2($A_1^{(n)}$ and $A_2^{(m)}, j_1 \ldots j_r, k_1 \ldots k_r)$, makes use of methods that perform cross-product and auto-intersection in one step (for intersection tape $j_1$ and $k_1$), and then the auto-intersection (for any intersecting tapes $j_i$ with $k_i$, for $i > 1$).

**C.4.1 Conditions**

Both embodiments for performing the multi-tape intersection operation operate under the conditions that:

(a) the semirings of the two automata $A_1^{(n)}$ and $A_2^{(m)}$ are equal to: $K_1 = K_2$; and

(b) the common semiring $\kappa = \kappa_1 = \kappa_2$ is commutative:

$$\forall w_1, w_2 \in \mathcal{K} : w_1 \otimes w_2 = w_2 \otimes w_1$$

(c) $A_1^{(n)}$ and $A_2^{(m)}$ have no cycles exclusively labeled with epsilon on any of the intersected tapes:

$$j_i \in [\![1, n]\!] \text{ and } k_i \in [\![1, m]\!], \text{ for } i \in [\![1, r]\!]$$

**C.4.2 Embodiments**

The first embodiment, Intersect1(), for carrying out the multi-tape intersection operation defined in section B.6 may be expressed in pseudocode as follows:

(a) in one embodiment, while referring at line 1 to CrossPA() (to perform a cross product operation on the WMTAs $A_1^{(n)}$ and $A_2^{(m)}$) set forth in Figure 5, at line 3 to the first AutoIntersect() method (to perform the auto-intersection operation for each intersecting tapes $j_i$ and $k_i$) set forth in Figure 6, and at line 4 to complementary projection $\overline{P}$ (to eliminate redundant tapes) described in section B.2:

$$\text{INTERSECT1} \left(A_1^{(n)}, A_2^{(m)}, j_1 \ldots j_r, k_1 \ldots k_r\right) \to A :$$
$$1 \qquad A \leftarrow \text{CROSSPA}(A_1^{(n)}, A_2^{(m)})$$

(continued)

---

INTERSECT1 $(A_1^{(n)}, A_2^{(m)}, j_1 \ldots j_r, k_1 \ldots k_r) \rightarrow A$ :

```
2          for ∀i ∈ [1, r] do
3              A ← AUTOINTERSECT(A, jᵢ, n + kᵢ)
4              A ← P̄_{n+k1, ...,n+kᵣ}(A)
5          return A
```

---

or (b) in another embodiment, while referring at line 1 to CrossPA() (to perform a cross product operation on the WMTAs $A_1^{(n)}$ and $A_2^{(m)}$ set forth in Figure 5, at line 4 to the second AutoIntersect() method (to perform the auto-intersection operation for each intersecting tapes $j_i$ and $k_i$) set forth in Figure 9, and at line 6 to complementary projection $\overline{P}$ (to eliminate redundant tapes) described in section B.2:

---

INTERSECT1 $(A_1^{(n)}, A_2^{(m)}, j_1 \ldots j_r, k_1 \ldots k_r) \rightarrow (A, boolean)$ :

$$1 \qquad A \leftarrow \mathrm{CROSSPA}\,(A_1^{(n)}, A_2^{(m)})$$

```
2          regular ← true
3          for ∀i ∈ [1, r] do
4              (A, reg) ← AUTOINTERSECT(A, jᵢ, n + kᵢ)
5              regular ← regular ∧ reg
6              A ← P̄_{n+k1, ...,n+kr}(A)
7          return (A, regular)
```

---

The second embodiment, Intersect2(), for carrying out the multi-tape intersection operation defined in section B.6 may be expressed in pseudocode as follows:
(a) in one embodiment, while referring at line 1 to IntersectCrossEps() set forth in Figure 15 (to perform the single-tape intersection operation on one pair of tapes, for tapes $j_1$ with $k_1$ on the WMTAs $A_1^{(n)}$ and $A_2^{(m)}$ at line 3 to AutoIntersect () set forth in Figure 6 (to perform the auto-intersection operation for any intersecting tapes $j_i$ with $k_i$, for $i>1$), and at line 4 to complementary projection $\overline{P}$ (to eliminate redundant tapes) described in section B.2:

---

INTERSECT2 $(A_1^{(n)}, A_2^{(m)}, j_1 \ldots j_r, k_1 \ldots k_r) \rightarrow A$ :

$$1 \qquad A \leftarrow \mathrm{INTERSECTCROSSEPS}\,(A_1^{(n)}, A_2^{(m)}, j_1, k_1)$$

```
2          for ∀i ∈ [2, r] do
3              A ← AUTOINTERSECT(A, jᵢ, n + kᵢ)
4              A ← P̄_{n+k1, ..., n+kr}(A)
5          return A
```

---

or (b) in another embodiment, while referring at line 1 to IntersectCrossEps() set forth in Figure 15 (to perform the single-tape intersection operation on one pair of tapes tapes $j_{i=1}$ with $k_{i=1}$ on the WMTAs $A_1^{(n)}$ ), and $A_2^{(m)}$), at line 4 to AutoIntersect() set forth in Figure 9 (to perform the auto-intersection operation for any intersecting tapes $j_i$ with $k_i$, for $i>1$), and at line 6 to complementary projection $\overline{P}$ (to eliminate redundant tapes) described in section B.2:

---

INTERSECT2 $(A_1^{(n)}, A_2^{(m)}, j_1 \ldots j_r, k_1 \ldots k_r) \rightarrow (A, boolean)$ :

$$1 \qquad A \leftarrow \mathrm{INTERSECTCROSSEPS}\,(A_1^{(n)}, A_2^{(m)}, j_1, k_1)$$

---

(continued)

INTERSECT2 $(A_1^{(n)}, A_2^{(m)}, j_1 \ldots j_r, k_1 \ldots k_r) \to (A, boolean)$ :

```
2        regular ← true
3        for ∀i ∈ [2,r] do
4            (A, reg) ← AUTOINTERSECT(A, jᵢ, n + kᵢ)
5            regular ← regular Λ reg
6        A ← P̄_{n+k₁,…,n+kᵣ}(A)
7        return (A, regular)
```

**C.4.3 Example**

By way of example, a solution is presented for compiling a multi-tape intersection of the MTA $A_1^{(2)}$), and the

MTA $A_2^{(2)}$), in accordance with the last method presented immediately above to produce the regular MTA $A^{(2)}$), as follows:

$$A^{(2)} = A_1^{(2)} \underset{\substack{1,1 \\ 2,2}}{\cap} A_2^{(2)} = \overline{\mathcal{P}}_{3,4}(\mathcal{I}_{2,4}(\mathcal{I}_{1,3}(A_1^{(2)} \times A_2^{(2)})$$

where $A_1^{(2)} \underset{\substack{1,1 \\ 2,2}}{\cap} A_2^{(2)}$), is given by:

$$
\begin{array}{cc}
a & b \\
\varepsilon & A
\end{array}
\begin{pmatrix} c & \bar{a} & b \\ B & \varepsilon & C \end{pmatrix}^{*}
\begin{array}{ccccc}
\varepsilon & \varepsilon & \varepsilon & c & \varepsilon \\
A & B & C & \varepsilon & A
\end{array}
\quad \underset{\substack{1,1 \\ 2,2}}{\cap} \quad
\begin{array}{c}
\varepsilon \\
A
\end{array}
\begin{pmatrix} a & b & \varepsilon & c \\ B & \varepsilon & C & A \end{pmatrix}^{*}
$$

where the preceding each row of the matrix-like representation sets forth a tape of each WMTA (e.g.,

$A_1^{(2)} = \langle a, \varepsilon \rangle \langle b, A \rangle (\langle c, B \rangle \langle a, \varepsilon \rangle \langle b, C \rangle)^{*} \langle \varepsilon, A \rangle \langle \varepsilon, B \rangle \langle \varepsilon, C \rangle \langle c, \varepsilon \rangle \langle \varepsilon, A \rangle$

In accordance with the method set forth above, the multi-tape intersection operation is performed in three steps.

First, the following automaton $B_1^{(4)} = I_{1,3}(A_1^{(2)} \times A_2^{(2)})$), is computed using single-tape intersection at line 1 (i.e., IntersectCrossEps() shown in Figure 15) to obtain:

$$
\begin{array}{ccc}
\varepsilon & a & b \\
\varepsilon & \varepsilon & A \\
\varepsilon & a & b \\
A & B & \varepsilon
\end{array}
\begin{pmatrix}
\varepsilon & c & a & b \\
\varepsilon & B & \varepsilon & C \\
\varepsilon & c & a & b \\
C & A & B & \varepsilon
\end{pmatrix}^{*}
\begin{array}{ccccc}
\varepsilon & \varepsilon & \varepsilon & c & \varepsilon \\
A & B & C & \varepsilon & A \\
\varepsilon & \varepsilon & \varepsilon & c & \varepsilon \\
C & \varepsilon & \varepsilon & A & \varepsilon
\end{array}
$$

Next, the following automaton $B_2^{(4)} = I_{2,4}(B_1^{(4)})$ is computed using auto-intersection at line 4 (i.e., AutoIntersect() shown in Figure 9) to obtain:

$$\begin{array}{ccc} \varepsilon & a & b \\ \varepsilon & \varepsilon & A \\ \varepsilon & a & b \\ A & B & \varepsilon \end{array} \left( \begin{array}{cccc} \varepsilon & c & a & b \\ \varepsilon & B & \varepsilon & C \\ \varepsilon & c & a & b \\ C & A & B & \varepsilon \end{array} \right)^1 \begin{array}{ccccc} \varepsilon & \varepsilon & \varepsilon & c & \varepsilon \\ A & B & C & \varepsilon & A \\ \varepsilon & \varepsilon & \varepsilon & c & \varepsilon \\ C & \varepsilon & \varepsilon & A & \varepsilon \end{array}$$

Finally, the following automaton $A^2 = \overline{\mathcal{P}}_{3,4}(B_2^{(4)})$ is computed using complementary projection $\overline{P}$ at line 6 (described in section B.2) to obtain:

$$\begin{array}{ccc} \varepsilon & a & b \\ \varepsilon & \varepsilon & A \end{array} \left( \begin{array}{cccc} \varepsilon & c & a & b \\ \varepsilon & B & \varepsilon & C \end{array} \right)^1 \begin{array}{ccccc} \varepsilon & \varepsilon & \varepsilon & c & \varepsilon \\ A & B & C & \varepsilon & A \end{array}$$

**D. Applications**
This section describes different applications for using the operations on WMATs that are described herein.
**D.1 General Use**

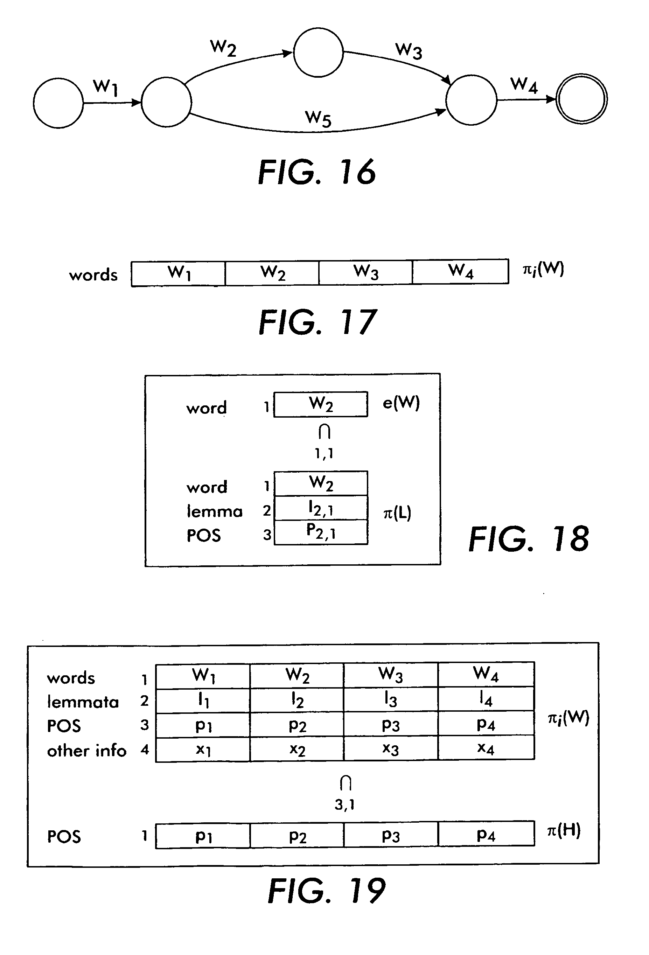

Figure 16 sets forth an automaton $W^{(1)}$ for illustrating a proposed operation for part-of-speech (POS) disambiguation and how it may be used in natural language processing (NLP).The automaton $W^{(1)}$ shown in Figure 16 is an automaton that represents a natural-language sentence, with one word w on each transition. In general, such an automaton can contain one or several paths, according to whether the sentence was unambiguously tokenized or not. In the example shown in Figure 16, the automaton $W^{(1)}$ contains two paths, corresponding to an ambiguous tokenization into either three or four words. Figure 17 illustrates the process for one path $\pi_i(W)$ (which occurs similarly for all paths) of the automaton $W^{(1)}$.
Table 2 sets forth resources that may be used in this example, which are encoded as WMTAs.

**TABLE 2**

| Automaton | Type Of Resource | Tapes |
|---|---|---|
| $N^{(2)}$ | normalizer | original word form, normalized form |
| $L^{(3)}$ | morphological lexicon | surface form, lemma, POS-tag |
| $H^{(1)}$ | Hidden Markov Model | POS-tag sequence |

This example can be expressed in pseudocode as follows:

```
1       for ∀e ∈ E(W) do
2       A(e)^(1) ← P₂( A(e)^(1) ∩₁,₁ N^(2) )
3       A(e)^(3) ← A(e)^(1) ∩₁,₁ L^(3)
4       if A(e)^(3) = ⊥
5       then A(e) ← ...
6       W^(4) ← W^(4) ∩₃,₁ H^(1)
7       W^(4) ← bestPath(W^(4))
```

At line 1 of the pseudocode above, each transition of 1-tape automaton $W^{(1)}$ (i.e., each word of the sentence) is processed separately: $A(e)$, representing the transition $e \in E(W)$, is intersected with a normalizer $N^{(2)}$ and only the second tape of the result is retained at line 2. Subsequently, $A(e)$ is intersected with a 3-tape morphological lexicon $L^{(3)}$ and becomes itself 3-tape as set forth in line 3 of the pseudocode and in Figure 18. Specifically, Figure 18 illustrates the intersection of an arc $e$ of $W^{(1)}$ with a path $\pi^{(3)}$ of the lexicon automaton $L^{(3)}$. If at line 4 this operation fails, then something else is done with A(e) at line 5 such as intersecting $A(e)$ with another n-tape automaton.

When all transitions have been separately processed, as described above, processing begins again on the sentence automaton $W^{(4)}$, which at this point has four tapes due to previous operations. At line 6, the sentence automaton $W^{(4)}$ is intersected with a 1-tape automaton $H^{(1)}$ that represents an HMM as shown in Figure 19. More specifically, Figure 19 illustrates the intersection of a path ), of the sentence automaton $W^{(4)}$ with a path $\pi^{(1)}$ of the HMM automaton $H^{(1)}$. Finally at line 7, only the best path of the sentence automaton $W^{(4)}$ is retained.

**D.2 Building A Lexicon From A Corpus**

Using basic software programming utilities such as those forming part of UNIX, a list of inflected words with their POS-tags and their frequencies from an annotated corpus may be generated and stored in a file. Such a file may for example contain entries as shown in Table 3.

**TABLE 3**

| Inflected Word | POS-tag | Fequency |
| --- | --- | --- |
| leave | NN | 7 |
| leave | VB | 154 |
| leaves | NNS | 18 |
| leaves | VBZ | 25 |
| leaving | VBG | 67 |
| left | JJ | 47 |
| left | VBD | 118 |
| left | VBN | 147 |

In one implementation, a WMTA lexicon may be created over the semiring $<\overline{IR}^+, +, x, 0, 1 >$, where each line of a file (as illustrated in Table 3) becomes the n-tape label of a path, such that each token of the line (or each column of Table 3) is placed onto a different tape, except for the last token (i.e., the frequency) which becomes the weight of the path. Using such an implementation and the example data in Table 3, a 2-tape corpus lexicon $C^{(2)}$ may be constructed with paths having the labels $l^{(2)}$ and the weights w as shown in Table 4.

**TABLE 4**

| Label $l^{(2)}$ | Weight w |
| --- | --- |
| <leave, NN> | 7 |
| <leave, VB> | 154 |
| <leaves, NNS> | 18 |
| <leaves, VBZ> | 25 |
| <leaving, VBG> | 67 |
| <left, JJ> | 47 |
| <left, VBD> | 118 |
| <left, VBN> | 147 |

**D.3 Enhancing A Lexicon With Lemmas**

The corpus of lexicons and lemmas defined in section D.2 may be enhanced using another lexicon encoded as a non-weighted MTA, $T^{(3)}$ having entries of the form $T^{(3)}$ <InflectedWord, Lemma, PosTag>, and containing at least those entries in Table 5.

**TABLE 5**

| Inflected Word | Lemma | PosTag |
| --- | --- | --- |
| leave | leave | NN |
| leave | leave | VB |

(continued)

| Inflected Word | Lemma | PosTag |
|---|---|---|
| leaves | leaf | NNS |
| leaves | leave | NNS |
| leaves | leave | VBZ |
| leaving | leave | VBG |
| left | left | JJ |
| left | leave | VBD |
| left | leave | VBN |

Each of the entries in Table 5 is uniformly weighted with $w$=1.0 by assigning 1.0 to each transition and final state. To distribute the probability among different lemmas for equal inflected forms and POS tags, the lexicon $T^{(3)}$ is normalized with respect to tape 1 and tape 3 using multi-tape intersection resulting in the entries shown in Table 6.

TABLE 6

| Lexicon $T^{(3)}$ | Weight w |
|---|---|
| <leave, leave, NN> | 1.0 |
| <leave, leave, VB> | 1.0 |
| <leaves, leaf, NNS> | 0.5 |
| <leaves, leave, NNS> | 0.5 |
| <leaves, leave, VBZ> | 1.0 |
| <leaving, leave, VBG> | 1.0 |
| <left, left, JJ> | 1.0 |
| <left, leave, VBD> | 1.0 |
| <left, leave, VBN> | 1.0 |

The intersection of the lexicon $T^{(3)}$ (having values shown in column 1 of Table 6) with the corpus lexicon $C^{(2)}$ (having values shown in Table 4) on the tapes of inflected forms and POS-tags, respectively, is defined as:

$$L^{(3)} = T^{(3)} \underset{\substack{1,1 \\ 3,2}}{\cap} C^{(2)}$$

and results in the lexicon $L^{(3)}$ the entries of which are shown in Table 7.

TABLE 7

| Lexicon $L^{(3)}$ | Weight w |
|---|---|
| <leave, leave, NN> | 7 |
| <leave, leave, VB> | 154 |
| <leaves, leaf, NNS> | 9 |
| <leaves, leave, NNS> | 9 |
| <leaves, leave, VBZ> | 25 |
| <leaving, leave, VBG> | 67 |
| <left, left, JJ> | 47 |
| <left, leave, VBD> | 118 |

(continued)

| Lexicon $L^{(3)}$ | Weight w |
|---|---|
| \<left, leave, VBN> | 147 |

Finally, the lexicon $L^{(3)}$ (having values shown in Table 7) is normalized (i.e., all entries with the same inflected form have a weight w that sums to one) with respect to inflected forms to provide the entries shown in Table 8.

**TABLE 8**

| Lexicon $L^{(3)}$ | Weight $w$ |
|---|---|
| \<leave, leave, NN> | 0.043 |
| \<leave, leave, VB> | 0.957 |
| \<leaves, leaf, NNS> | 0.209 |
| \<leaves, leave, NNS> | 0.209 |
| \<leaves, leave, VBZ> | 0.581 |
| \<leaving, leave, VBG> | 1.000 |
| \<left, left, JJ> | 0.151 |
| \<left, leave, VBD> | 0.378 |
| \<left, leave, VBN> | 0.471 |

**D.4 Normalizing A Lexicon**

In this example, the conditional normalization of a WMTA, ), is compiled over the semiring $<\overline{IR}^+, +, x, 0, 1>$, with respect to some of its tapes, using a generalization of the method proposed by Eisner in "Parameter Estimation For Probabilistic Finite-state Transducers", in Proceedings of the 40th Annual Meeting, pages 1-8, Philadelphia, PA, USA, Association For Computer Linguistics, 2002. Consider, for instance, each string tuple $u^{(n+m)}$ in the language ), of ), to be a pair of string tuples (i.e., $u^{(n+m)} = s^{(n)} : v^{(m)}$). Normalizing), conditionally with respect to $n+1$ to $n+m$ means compiling for each $u^{(n+m)}$ the probability of $s^{(n)}$ in the context of $v^{(m)}$.

Suppose, originally the weight of each $u^{(n+m)}$ is its frequency (i.e., the frequency of concurrence of tuples $s^{(n)}$ and $v^{(m)}$) is given by:

$$w_{A_1}(\, u^{(n+m)}\, )\ =\ f(\, s^{(n)}{:}v^{(m)}\, )$$

The context tapes of ), are projected and the following context language is obtained:

$$\mathcal{L}_c^{(m)}\ =\ \mathcal{P}_{n+1,\dots,n+m}(\, \mathcal{L}_1^{(n+m)}\, )$$

Each string tuple $v^{(m)} \in$ ), of the determinized context automaton), has the weight given by:

$$w(\, v^{(m)}\, )\ =\ \bigoplus_{v_i^{(m)}=v^{(m)}} w_{A_1}(\, s_i^{(n)}{:}v_i^{(m)}\, )\ =\ f(\, v^{(m)}\, )$$

The weight of all string tuples $v^{(m)} \in$ ), is inversed by inversing the weight of each transition and each final state of ), The resulting weight of each $v^{(m)}$ is given by:

$$w_{A_c}(\,v^{(m)}\,)\;=\;f(\,v^{(m)}\,)^{-1}$$

Finally, the original ), is intersected with ), on all context tapes, and an automaton ), obtained with the language given by:

$$\mathcal{L}_2^{(n+m)}\;=\;\mathcal{L}_1^{(n+m)}\underset{\substack{n+1,1\\ \cdots\\ n+m,m}}{\bigcap}\mathcal{L}_c^{(m)}$$

All string tuples $u^{(n+m)} = s^{(n)} : v^{(m)} \in$ ), have the weight given by:

$$
\begin{aligned}
w_{A_2}(\,u^{(n+m)}\,) &= w_{A_1}(\,s^{(n)}{:}v^{(m)}\,)\otimes w_{A_c}(\,v^{(m)}\,)\\
&= f(\,s^{(n)}{:}v^{(m)}\,)\cdot f(\,v^{(m)}\,)^{-1}\\
&= p(\,s^{(n)}\,|\,v^{(m)}\,)
\end{aligned}
$$

Those skilled in the art will appreciate that this approach does not require the context tapes to be consecutive.

To compile the joint normalization of a WMTA, ), over the semiring $<\overline{I\!R}^+, +, \times, 0, 1>$, the frequency of each string tuple s(n)$\in$ ), is multiplied with the inverse of the total frequency $f_T$ of all string tuples. The total frequency $f_T$ can be obtained by replacing the label of each transition of $A_1^{(n)}$ with ε and applying an epsilon removal (as described for example by Mohri in "Generic epsilon-removal and input epsilon-normalization algorithms for weighted transducers", in International Journal of Foundations of Computer Science, 13(1):129-143, 2002). The resulting automaton, AT, has one single state, without any outgoing transitions, and a final weight that equals the total frequency, $Q = f_T$. The final weight $Q$ is inversed and $A_1^{(n)}$ ), is concatenated with $A_T$. All string tuples $s^{(n)} \in L(A_2^{(n)})$ ), of the resulting automaton $A_2^{(n)} = A_1^{(n)} A_T$ have the weight given by:

$$
\begin{aligned}
w_{A_2}(\,s^{(n)}\,) &= w_{A_1}(\,s^{(n)}\,)\otimes w_{A_T}(\,\varepsilon^{(n)}\,)\\
&= f(\,s^{(n)}\,)\cdot f_T^{-1}\\
&= p(\,s^{(n)}\,)
\end{aligned}
$$

D.5 Using A Lexicon

When using a lexicon WMTA, A(n), the following may be specified: r input tapes, $j_1$ to $j_r$, and x output tapes, $k_1$ to $k_x$, which do not have to be consecutive. A weighted r-tuple of input strings, $s^{(r)}$, may first be converted into an input WMTA, $I^{(r)}$, having one single path with the specified label, $s^{(r)}$, and weight, $w(s^{(r)})$. Subsequently to obtaining the output WMTA, $O^{(x)}$, whose language contains all weighted x-tuples of output strings, $v^{(x)}$, the following multi-tape intersection and projection may be used:

$$O^{(x)}\;=\;\mathcal{P}_{k_1,\ldots,k_x}(\,A^{(n)}\underset{\substack{j_1,1\\ \cdots\\ j_r,r}}{\bigcap}I^{(r)}\,)$$

D.6 Searching For Similarities

In the applications described in this section, string tuples *s(n)* may searched for in the language $L_1^{(n)}$ ), of a WMTA $A_1^{(n)}$ ), whose strings $s_{j1}$ to $s_{jr}$ are similar to its strings $s_{k1}$ to $s_{kr}$, respectively. The comparison of each pair of tapes, $j_i$ and $k_i$, may be done independently form all other pairs of tapes. Hence the task may be reduced to comparing two tapes, $j$ and *k*.

First, a 2-tape automaton, $R^{(2)}$, may be created, whose language, $L_R^{(2)}$, describes the requested relation between tape *j* and *k* of $L_1^{(n)}$. ), To obtain the language given by the relation:

$$\mathcal{L}_2^{(n)} \subseteq \mathcal{L}_1^{(n)}$$

and where when this relation holds between the languages, the following language may be compiled:

$$\mathcal{L}_2^{(n)} \;=\; \mathcal{L}_1^{(n)} \cdot \bigcap_{\substack{j,1 \\ k,2}} \; R^{(2)}$$

In one specific example, suppose there exists an English-German dictionary that is encoded as a 3-tape WMTA, with each entry being of the form <English, German, PosTag>. To find all words that are similar in the two languages, while having the same POS tag, a 2-tape automaton, $R^{(2)}$, may be created that describes this similarity by using, for example, either of the approaches referred to herein as the "Levenshtein Distance" or the "List of Grapheme Correspondences" described below.

The Levenshtein Distance between two strings is the minimal number of intersections, deletions or substitutions of symbols that are needed to transform one string into the other, as disclosed by Schulz and Mihov in "Fast string correction with Levenshtein automata", International Journal on Document Analysis and Recognition, 5(1):67-85, 2002. A WMTA, $Lv_d^{(2)}$, ), having a Levenshtein Distance d between the members $s_1$ and $s_2$ of all string tuples $s^{(2)} \in$ ), can be compiled from the regular expression:

$$Lv_d^{(2)} \;=\; \left(\; (?_i?)^* \; (?:? \;\cup\; ?:\varepsilon \;\cup\; \varepsilon:? ) \; (?_i?)^* \;\right)^d ,$$

where ? means any symbol (i.e., ? $\in$ {a, b, c, ...}), and :$_i$ is an identity paring such that (? :$_i$ ?) $\in$ {a:a, b:b, c:c, ...}, whereas (?:?) $\in$ {a:a, a:b, b:a, ...}.

The List of Grapheme Correspondences by manually writing a list of synchronic grapheme correspondences resulting from historical phonological alterations in the English and German languages may, for example, contain the entries in Table 9 (for English in column 1 and German in column 2).

**TABLE 9**

| ENGLISH | GERMAN |
|---------|--------|
| th | d |
| th | ss |
| d | t |

Using the lexicon construction method described in sections D.2-D.5, the list of entries in Table 9 may be used to construct a lexicon-like automaton, $Ch^{(2)}$, that encodes these changes in the form set forth in Table 10 (where column 1 identifies the lexicon, and column 2 identifies the weight).

**TABLE 10**

| Lexicon Ch$^{(2)}$ | Weight w |
|---|---|
| <th, d> | 1 |
| <th, ss> | 1 |
| <d, t> | 1 |

The lexicon-like automaton Ch$^{(2)}$ may then be used to obtain a WMTA, R$^{(2)}$, whose language describes the relation between any English word and its potential German form that is given by:

$$R^{(2)} = ( \mathrm{Ch}^{(2)} \cup ?_i? )^+$$

.

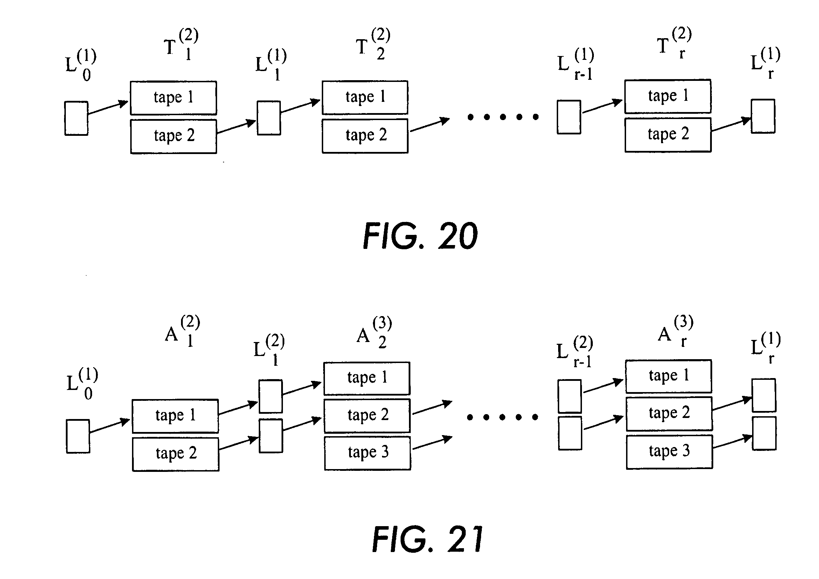

**D.7 Preserving Intermediate Transduction Results**
In this section, the advantage of WMTAs through transduction cascades, which are frequently used in language and speech processing, is illustrated. In a (classical) weighted transduction cascade, ), a set of weighted strings, encoded as a weighted acceptor, ), is composed with the transducer, ), on its input tape as shown in Figure 20. The output projection of this composition is the first intermediate result, ), of the cascade. It is further composed with the second transducer, ), which leads to the second intermediate result, ), etc. The projection of the last transducer is the final result, ), which is defined as follows:

$$L_i^{(1)} = \mathcal{P}_2( L_{i-1}^{(1)} \diamond T_i^{(2)} ) \qquad \text{for } i \in [\![1, r]\!]$$

At any point in this cascade, previous results cannot be accessed.
In a weighted transduction cascade,), that uses WMTAs and multi-tape intersection, intermediate results can be preserved and used by all subsequent transductions. For example, assuming the two previous results at each point in the cascade (except in the first transduction) are to be used in computing the results. This operation requires all intermediate results, ), to have two tapes as shown in Figure 2 and defined as follows:

$$L_1^{(2)} = L_0^{(1)} \underset{1,1}{\cap} A_1^{(2)}$$

$$L_i^{(2)} = \mathcal{P}_{2,3}( L_{i-1}^{(2)} \underset{\substack{1,1 \\ 2,2}}{\cap} A_i^{(3)} ) \qquad \text{for } i \in [\![2, r{-}1]\!]$$

$$L_r^{(2)} = \mathcal{P}_3( L_{r-1}^{(2)} \underset{\substack{1,1 \\ 2,2}}{\cap} A_r^{(3)} )$$

This augmented descriptive power is also available if the whole cascade is intersected into a single WMTA, $A^{(2)}$ (although $A^{(2)}$ has only two tapes in the example). Each of the "incorporated" multi-tape sub-relations in $A^{(2)}$ (except for the first one) will still refer to its two predecessors as follows:

$$A_{1...i}^{(3)} = \mathcal{P}_{1,n-1,n}( A_{1...i-1}^{(m)} \underset{\substack{n-1,1 \\ n,2}}{\cap} A_i^{(3)} ) \quad \text{for } i \in [\![2, r]\!],\ m \in \{2, 3\}$$

$$A^{(2)} = \mathcal{P}_{1,n}(A_{1...r})$$

Advantageously, this example illustrates how intermediate results can be preserved in transduction cascades sot that they can be accessed by any of the following transductions.

**D.8 Example System**

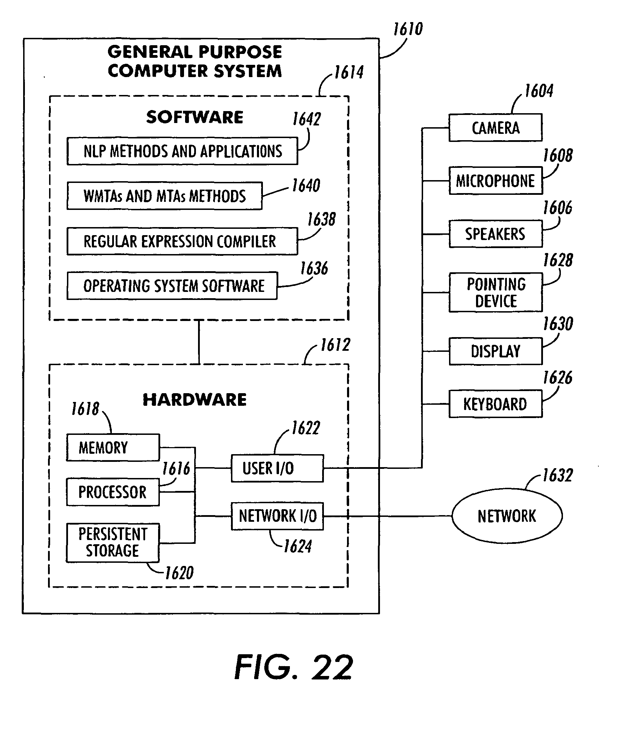

Figure 22 illustrates a general purpose computer system 1610 for carrying out NLP in accordance with the present invention. The system 1610 includes hardware 1612 and software 1614. The hardware 1612 is made up of a processor (i.e., CPU) 1616, memory 1618 (ROM, RAM, etc.), persistent storage 1620 (e.g., CD-ROM, hard drive, floppy drive, tape drive, etc.), user I/O 1622, and network I/O 1624. The user I/O 1622 can include a keyboard 1626, a pointing device 1628 (e.g., pointing stick, mouse, etc.), microphone 1608, camera 1604, speakers 1606, and the display 1630. The network I/O 1624 may for example be coupled to a network 1632 such as the Internet. The software 1614 of the system 1610 includes an operating system 1636, a regular expression compiler 1638, a WMTAs and MTAs methods 1640 (e.g., auto-intersection and tape-intersection), and NLP methods and applications 1642. In one embodiment, the natural language processing methods and applications 1642 use WMTAs and MTAs that are stored in memory 1618 and that are compiled, for example, from regular expressions using compiler 1638, to perform one or more singly or in combination of POS tagging, tokenization, phonological and morphological analysis, disambiguation, spelling correction, translation, entity extraction, and shallow parsing.

**E. Miscellaneous**

Although the present invention is generally directed at weighted automata, each operation described in the forgoing specification may be used to operate on non-weighted automata as well. Additional background of the invention is described in the following publications: Andre Kempe, Christof Baeijs, Tamas Gaal, Franck Guingne, Florent Nicart, "WFSC - A new weighted finite state compiler", 8th Int. Conf. on Implementation and Application of Automata (CIAA 03), Santa Barbara, CA, USA, July 16-18, 2003 (which describes an example framework for carrying out the weighted finite state operations set forth herein); and Andre Kempe, "NLP Applications based on weighted multi tape automata", TALN, Fes, Morocco, April 19-22, 2004 (which describes an additional example related to section D.6 for extracting similar words in French and Spanish).

Advantageously over (weighted) 1-tape or 2-tape system for processing automata, the forgoing specification for processing n-tape automata permits: (a) the separation of different types of information used in NLP over different tapes (e.g., surface form, lemma, POS-tag, domain-specific information, etc.); (b) the preservation of some or all intermediate results of various NLP steps on different tapes; and (c) the possibility of defining and implementing contextual replace rules referring to different types of information on different tapes. Contextual replace rules are more fully described in the publications by: Kaplan and Kay "Regular models of phonological rule systems", Computational Linguistics 20(3): 331-378, 1994; Karttunen "The replace operator", Proceedings of the 33rd Annual Meeting, Cambridge, MA, USA, Association for Computational Linguistics, pages 16-23, 1995; and Kempe and Karttunen, "Parallel replacement in finite-state calculus", Proceedings of the 16th International Conference on Computational Linguistics (CoLing), volume 2, pages 622-627, Copenhagen, Denmark, ACL, 1996.

In addition, it will be appreciated by those skilled in the art that the forging specification provides the following advantages that are difficult to obtain using 1-tape or 2-tape automata: (a) a simplified description, implementation, modification, and maintenance of a sequence of NLP tasks (as described for example in section D.1); and (b) the ability to execute a sequence of NLP tasks in a single tool via an end-user interface enabled for performing the operations on automata described herein.

**Claims**

1. In a system for processing natural language, a method for intersecting tapes of a first multi-tape automaton (MTA) and a second MTA, with each MTA having a plurality of tapes and a plurality of paths, comprising:

(a) computing (302) a cross-product MTA using the first MTA and the second MTA;
(b) generating (304) string tuples for paths of the cross-product MTA;
(c) for each string tuple generated at (b), evaluating (310) whether the string of a first tape equals the string of a second tape;
(d) for each string tuple evaluated at (c) having equal strings at the first and second tapes, retaining (312) the corresponding string tuple in the cross-product MTA;
(e) for each string tuple evaluated at (c) having unequal strings at the first and second tapes, restructuring (314) the cross-product MTA to remove the corresponding string tuple;

(f) removing (318) redundant strings in the string tuples retained in the cross-product MTA at (d) to produce an output MTA.

2. The method according to claim 1, wherein (f) comprises removing redundant strings in the string tuples retained in the cross-product MTA at (d) to produce an output MTA that preserves at least one other tape besides one of the first and second tapes of the cross-product MTA without modification.

3. The method according to claim 2, further comprising repeating (a) - (f) in a cascade of a first transduction and a second transduction, wherein at least one of the tapes preserved after completing the first transduction is accessed to perform the second transduction.

4. The method according to claim 3, wherein each MTA has weighted transitions.

5. The method according to claim 4, wherein the weights transitions of each MTA are probabilities.

6. The method according to claim 1, wherein the first MTA encodes strings in a first natural language and the second MTA encodes strings in a second natural language.

7. The method according to claim 6, wherein the output MTA identifies related strings of the first natural language and the second natural language.


**Patentansprüche**

1. In einem System zum Verarbeiten einer natürlichen Sprache, ein Verfahren zum Kreuzen von Tapes eines ersten Multi-Tape-Automatons (MTA) und eines zweiten MTA, wobei jedes MTA eine Mehrzahl an Tapes und eine Mehrzahl an Pfaden aufweist, das umfasst:

(a) Berechnen (302) eines Kreuzprodukt-MTA unter Verwendung des ersten MTA und des zweiten MTA;
(b) Erzeugen (304) von String-Tupeln für Pfade des Kreuzprodukt-MTA;
(c) für jedes String-Tupel, das in (b) erzeugt wird, Auswerten (310), ob der String eines ersten Tapes dem String eines zweiten Tapes gleich ist;
(d) für jedes String-Tupel, von dem in (c) ausgewertet wird, dass es an dem ersten und zweiten Tape gleiche Strings aufweist, Beibehalten (312) des entsprechenden String-Tupels in dem Kreuzprodukt-MTA;
(e) für jedes String-Tupel, von dem in (c) ausgewertet wird, dass es an dem ersten und zweiten Tape ungleiche Strings aufweist, Restrukturieren (314) des Kreuzprodukt-MTA, um das entsprechende String-Tupel zu entfernen;
(f) Entfernen (318) redundanter Strings in den String-Tupeln, die in dem Kreuzprodukt-MTA in (d) beibehalten werden, um ein Ausgabe-MTA zu erzeugen.

2. Das Verfahren gemäß Anspruch 1, in dem (f) das Entfernen redundanter Strings in den String-Tupeln umfasst, die in (d) in dem Kreuzprodukt-MTA beibehalten werden, um ein Ausgabe-MTA zu erzeugen, das neben einem von dem ersten und zweiten Tape des Kreuzprodukt-MTA zumindest ein weiteres Tape ohne Modifikation behält.

3. Das Verfahren gemäß Anspruch 2, das weiterhin das Wiederholen von (a) - (f) in einer Kaskade einer ersten Transduktion und einer zweiten Transduktion umfasst, wobei zumindest auf eines der Tapes, die nach dem Fertigstellen der ersten Transduktion behalten werden, zugegriffen wird, um die zweite Transduktion auszuführen.

4. Das Verfahren gemäß Anspruch 3, in dem jedes MTA gewichtete Übergänge aufweist.

5. Das Verfahren gemäß Anspruch 4, in dem die gewichteten Übergänge jedes MTA Wahrscheinlichkeiten sind.

6. Das Verfahren gemäß Anspruch 1, in dem das erste MTA Strings in einer ersten natürlichen Sprache einschließt und das zweite MTA Strings in einer zweiten natürlichen Sprache kodiert.

7. Das Verfahren gemäß Anspruch 6, in dem das Ausgabe-MTA mit einander in Beziehung stehende Strings der ersten natürlichen Sprache und der zweiten natürlichen Sprache identifiziert.

**Revendications**

1. Procédé, dans un système de traitement de langage naturel, pour l'intersection de bandes d'un premier automate multi-bandes (MTA) et d'un deuxième MTA, chaque MTA ayant une pluralité de bandes et une pluralité de chemins, comprenant les étapes qui consistent :

   (a) à calculer (302) un MTA de produit vectoriel en utilisant le premier MTA et le deuxième MTA ;
   (b) à générer (304) des uplets de chaîne pour des chemins du MTA de produit vectoriel ;
   (c) à évaluer (310), pour chaque uplet de chaîne généré à l'étape (b), si la chaîne d'une première bande est égale à la chaîne d'une deuxième bande ;
   (d) à retenir (312), pour chaque uplet de chaîne évalué à l'étape (c) ayant des chaînes égales au niveau des première et deuxième bandes, l'uplet de chaîne correspondant dans le MTA de produit vectoriel ;
   (e) à restructurer (314), pour chaque uplet de chaîne évalué à l'étape (c) ayant des chaînes inégales au niveau des première et deuxième bandes, le MTA de produit vectoriel pour retirer l'uplet de chaîne correspondant ;
   (f) à retirer (318) des chaînes redondantes dans les uplets de chaîne retenus dans le MTA de produit vectoriel à l'étape (d) pour produire un MTA de sortie.

2. Procédé selon la revendication 1, dans lequel l'étape (f) comprend le retrait de chaînes redondantes dans les uplets de chaîne retenus dans le MTA de produit vectoriel à l'étape (d) pour produire un MTA de sortie qui conserve au moins une autre bande en plus de l'une des première et deuxième bandes du MTA de produit vectoriel sans modification.

3. Procédé selon la revendication 2, comprenant en outre le fait de répéter les étapes (a) - (f) dans une cascade d'une première transduction et d'une deuxième transduction, où on accède à au moins l'une des bandes conservées après achèvement de la première transduction, pour effectuer la deuxième transduction.

4. Procédé selon la revendication 3, dans lequel chaque MTA a des transitions pondérées.

5. Procédé selon la revendication 4, dans lequel les transitions pondérées de chaque MTA sont des probabilités.

6. Procédé selon la revendication 1, dans lequel le premier MTA code des chaînes dans un premier langage naturel et le deuxième MTA code des chaînes dans un deuxième langage naturel.

7. Procédé selon la revendication 6, dans lequel le MTA de sortie identifie des chaînes associées du premier langage naturel et du deuxième langage naturel.

**FIG. 1**

**FIG. 2**

```
                          ( START )

                                                              ╭ 302
   ┌─────────────────────────────────────────────────────────────┐
   │ COMPUTE A CROSS-PRODUCT WMTA USING A FIRST WMTA AND A SECOND WMTA │
   └─────────────────────────────────────────────────────────────┘

   ┌─────────────────────────────────────────────────────────────┐
   │ GENERATE STRING TUPLES FOR EACH PATH OF THE CROSS-PRODUCT WMTA  │
   └─────────────────────────────────────────────────────────────┘
                                                              ╰ 304

    306
   ┌─────────────────────────────────────────────────────────────┐
   │   FOR EACH STRING TUPLE GENERATED AT 304 AND FOR A            │
   │   FIRST SELECTED TAPE AND A SECOND SELECTED TAPE             │
   └─────────────────────────────────────────────────────────────┘

                                                              308
   ┌─────────────────────────────────────────────────────────────┐
   │   COMPARE THE STRING OF THE FIRST SELECTED TAPE WITH THE      │
   │   STRING OF THE SECOND SELECTED TAPE IN THE STRING TUPLE      │
   └─────────────────────────────────────────────────────────────┘

          310 ╮            ARE THE
     NO          STRINGS COMPARED          YES
    ◁───────    IN THE STRING TUPLE AT 308    ───────▷
                      EQUAL?

                                                              312
   ┌─────────────────────────┐         ┌─────────────────────────┐
   │ RESTRUCTURE THE CROSS-   │         │ RETAIN THE STRING TUPLE IN│
   │ PRODUCT WMTA TO REMOVE   │  314    │ THE CROSS-PRODUCT WMTA   │
   │ THE STRING TUPLE         │         └─────────────────────────┘
   └─────────────────────────┘

                              316
     NO              LAST
    ◁───────    STRING TUPLE
                  AT 306?
                     │ YES
                                                              318
   ┌─────────────────────────────────────────────────────────────┐
   │ REMOVE REDUNDANT STRINGS IN THE STRING TUPLES RETAINED        │
   │ AT 312 IN THE CROSS-PRODUCT WMTA                              │
   └─────────────────────────────────────────────────────────────┘

                          ( END )
```

# FIG. 3

$A_1^{(3)}$ — a:b:c/$w_1$ — x:y:z/$w_2$ — $w_6$ — e:f:g:/$w_3$

$A_2^{(2)}$ — a:c/$w_4$ — a:g/$w_5$ — $w_7$

a:b:c:a:c/$w_1 \otimes w_4$  x:y:z:a:g/$w_2 \otimes w_5$  $w_6 \otimes w_7$

$A_3^{(5)} = A_1^{(3)} \times A_2^{(2)}$  e:f:g:a:g/$w_3 \otimes w_5$

a:b:c:a:c/$w_1 \otimes w_4$  e:f:g:a:g/$w_3 \otimes w_5$  $w_6 \otimes w_7$

$A_4^{(5)} = I_{(3,5)}(A_3^{(5)})$

a:b:c:a/$w_1 \otimes w_4$  e:f:g:a/$w_3 \otimes w_5$  $w_6 \otimes w_7$

$A_5^{(4)} = \overline{\mathcal{P}}_5(A_4^{(5)}) = A_1^{(3)} \underset{3,2}{\bigcap} A_2^{(2)}$

# FIG. 4

$\text{CrossPA}(A_1^{(n)}, A_2^{(m)}) \to A :$

$A \leftarrow \langle \rangle_1 \cup \rangle_2, \not{p}, \perp, \not{p}, \not{c}, K_1 \rangle$

$Stack \leftarrow \not{c}$

$i \leftarrow \text{CREATESTATE}(i_1, i_2)$

$push(Stack, i)$

while $Stack \neq \not{c}$ do

    $q \leftarrow pop(Stack) : \mu[q] = (q_1, q_2)$

    if $q_1 / \perp \wedge q_2 / \perp$

        then for $\forall e_1 \in E(q_1)$ do

            for $\forall e_2 \in E(q_2)$ do

                if $\neg \exists q' \in Q : \mu[q'] - (n(e_1), n(e_2))$

                    then $q' \leftarrow \text{CREATESTATE}(n(e_1), n(e_2))$

                        $push(Stack, q')$

                $E \leftarrow E \cup \{ \langle q, \ell(e_1):\ell(e_2), w(e_1) \otimes w(e_2), q' \rangle \}$

    if $\varrho(q_1) \neq \bar{0} \vee q_1 = \perp$

        then for $\forall e_2 \in E(q_2)$ do

            if $\neg \exists q' \in Q : \mu[q']$   $(\perp, n(e_2))$

                then $q' \leftarrow \text{CREATESTATE}(\perp, n(e_2))$

                    $push(Stack, q')$

            $E \leftarrow E \cup \{ \langle q, \varepsilon^{(n)}:\ell(e_2), \varrho(q_1) \otimes w(e_2), q' \rangle \}$

    if $\varrho(q_2) / 0 \vee q_2 \perp$

        then for $\forall e_1 \in E(q_1)$ do

            if $\neg \exists q' \in Q : \mu[q'] = (n(e_1), \perp)$

                then $q' \leftarrow \text{CREATESTATE}(n(e_1), \perp)$

                    $push(Stack, q')$

            $E \leftarrow E \cup \{ \langle q, \ell(e_1):\varepsilon^{(m)}, w(e_1) \otimes \varrho(q_2), q' \rangle \}$

return $A$

$\text{CREATESTATE}(q_1, q_2) :$

$Q \leftarrow Q \cup \{q\}$

$\varrho(q) \leftarrow \varrho(q_1) \otimes \varrho(q_2)$

$\mu[q] \leftarrow (q_1, q_2)$

return $q$

# FIG. 5

```
AUTOINTERSECT(A₁, j, k) → A :
1    A ← ⟨Σ₁, ∅, ⊥, ∅, ∅, K₁⟩
2    Stack ← ∅
3    i ← CREATESTATE(i₁, ⊥, ε, ε)
4    push(Stack, i)
5    while q ← pop(Stack) : ν[q]  q₁ , ξ[q]   (s, u)  do
6         for ∀e₁ ∈ E(q₁)  do
7              (s', u') ← CREATELEFTOVERSTRINGS(s, ℓⱼ(e₁), u, ℓₖ(e₁))
8              if  s' = ε ∨ u' = ε
9                   then  if  ∃q̂ ∈ Q : ν[q̂] = n(e₁) ∧ ISREACHABLE(q̂, q) ∧ ξ[q̂] ≠ (s', u')
10                             then  return ⊥                    [cannot terminate]
11                        if  ¬∃q' ∈ Q : ν[q']  n(e₁) ∧ ξ[q']  (s', u')
12                             then  q' ← CREATESTATE(n(e₁), q, s', u')
13                                   push(Stack, q')
14                        E ← E ∪ { ⟨q, ℓ(e₁), w(e₁), q'⟩ }
15   return A
```

```
CREATELEFTOVERSTRINGS(s₀, s₁, u₀, u₁) → (s, u) :
16   s ← s₀ s₁
17   u ← u₀ u₁
18   x ← lcp(s, u)
19   return (x⁻¹ s , x⁻¹ u)
```

```
CREATESTATE(q₁, q̂, s, u) → q :
20   Q ← Q ∪ {q}
21   if  s   ε ∧ u   ε
22        then  ϱ(q) ← ϱ(q₁)
23        else  ϱ(q) ← 0̄
24   ν[q] ← q₁
25   ψ[q] ← q̂
26   ξ[q] ← (s, u)
27   return q
```

```
ISREACHABLE(q̂, q̌) → boolean :
28   while q̌ / ⊥
29        if  q̌ = q̂
30             then  return true
31             else  q̌ ← ψ[q̌]
32   return false
```

**FIG. 6**

EP 1 531 400 B1

FIG. 7

**FIG. 8**

```
AUTOINTERSECT(A₁, j, k) → (A, boolean) :
1    (δmax, δmax2) ← GETMAXDELAYS(A₁, j, k)
2    A ← ⟨Σ₁, ψ, ⊥, ψ, ψ, K₁⟩
3    Stack ← ∅
4    i ← GETSTATE(i₁, (ε, ε))
5    while q ← pop(Stack) : ν[q] = q₁, ξ[q] = (s, u) do
6         for ∀e₁ ∈ E(q₁) do
7              (s', u') ← CREATELEFTOVERSTRINGS(s, ℓⱼ(e₁), u, ℓₖ(e₁))
8              if ( s' = ε ∨ u' = ε ) ∧ ( |δ(s', u')| ≤ δmax2 )
9                   then q' ← GETSTATE(n(e₁), (s', u'))
10                       E ← E ∪ { ⟨q, ℓ(e₁), w(e₁), q'⟩ }
11   regular ← ( ∄q ∈ Q : |δ(ξ[q])| > δmax ∧ coreachable(q) )
12   return ( A, regular )


CREATELEFTOVERSTRINGS(s₀, s₁, u₀, u₁) → (s, u) :
13   s ← s₀ s₁
14   u ← u₀ u₁
15   x ← lcp(s, u)
16   return (x⁻¹ s, x⁻¹ u)


GETSTATE(q₁, (s', u')) → q :
17   if ∃q' ∈ Q : ν[q'] = q₁ ∧ ξ[q'] = (s', u')
18       then q ← q'
19       else Q ← Q ∪ {q}               [create new state]
20            if s = ε ∧ u = ε
21                then ρ(q) ← ρ(q₁)
22                else ρ(q) ← 0̄
23            ν[q] ← q₁
24            ξ[q] ← (s', u')
25            push(Stack, q)
26   return q


GETMAXDELAYS(A₁, j, k) → (δmax, δmax2) :
27   for ∀q₁ ∈ Q₁ do
28       χ[q₁] ← ⊥
29   (δ̂max, δ̂min, δ̂cyc) ← MAXDEL(i₁, j, k, (0, 0), (0, 0, 0))
30   δ̂cyc ← δ̂cyc · max(1, δ̂cyc − 1)
31   δmax ← max(δ̂max − δ̂min, δcyc)
32   return (δmax, δmax + δcyc)


MAXDEL(q₁, j, k, (χ'₁, χ'₂), (δ'max, δ'min, δ'cyc)) → (δ̂max, δ̂min, δ̂cyc) :
33   δ̂max ← max(δ'max, χ'₁ − χ'₂)
34   δ̂min ← min(δ'min, χ'₁ − χ'₂)
35   if χ[q₁] = (χ₁, χ₂) ≠ ⊥          [cycle end]
36       then δ̂cyc ← max(δ'cyc, | (χ'₁ − χ'₂) − (χ₁ − χ₂) |)
37       else χ[q₁] ← (χ'₁, χ'₂)
38            δ̂cyc ← δ'cyc
39            for ∀e ∈ E(q₁) do
40                 (δ̂max, δ̂min, δ̂cyc) ← MAXDEL(n(e), j, k, (χ'₁ + |ℓⱼ(e)|, χ'₂ + |ℓₖ(e)|), (δ̂max, δ̂min, δ̂cyc))
41            χ[q₁] ← ⊥
42   return (δ̂max, δ̂min, δ̂cyc)
```

# FIG. 9

FIG. 10

*FIG. 11*

FIG. 12

INTERSECTCROSS$(A_1, A_2, j, k) \rightarrow A$ :

$A \leftarrow \langle \emptyset, \emptyset, \perp, \emptyset, \emptyset, \mathcal{K}_1 \rangle$

$Stack \leftarrow \emptyset$

$i \leftarrow$ GETSTATE$(i_1, i_2)$

while $Stack \neq \emptyset$ do

    $q \leftarrow pop(Stack)$ : $\mu[q] = (q_1, q_2)$

    for $\forall e_1 \in E(q_1)$ do

        for $\forall e_2 \in E(q_2)$ do

            if $\ell_j(e_1) = \ell_k(e_2)$

                then $q' \leftarrow$ GETSTATE$(n(e_1), n(e_2))$

                    $E \leftarrow E \cup \{ \langle q, \ell(e_1) : \ell(e_2), w(e_1) \otimes w(e_2), q' \rangle \}$

return $A$


GETSTATE$(q_1, q_2) \rightarrow q$ :

if $\exists q' \in Q : \mu[q'] = (q_1, q_2)$

    then $q \leftarrow q'$

    else $Q \leftarrow Q \cup \{q\}$               [create new state]

        $\varrho(q) \leftarrow \varrho(q_1) \otimes \varrho(q_2)$

        $\mu[q] \leftarrow (q_1, q_2)$

        $push(Stack, q)$

return $q$

*FIG. 13*

FIG. 14

EP 1 531 400 B1

EP 1 531 400 B1

```
INTERSECTCROSSEPS(A_1^{(n_1)}, A_2^{(n_2)}, j, k) → A :

1      A ← ⟨Σ_1 ∪ Σ_2, ∅, ⊥, ∅, ∅, K_1⟩
2      Stack ← ∅
3      i ← GETSTATE(i_1, i_2, 0)
4      while Stack ≠ ∅ do
5          q ← pop(Stack) : ϑ[q] = (q_1, q_2, q_ε)
6          for ∀e_1 ∈ E(q_1) do
7              for ∀e_2 ∈ E(q_2) do
8                  if  ℓ_j(e_1) = ℓ_k(e_2) ∧ (q_ε = 0 ∨ ℓ_j(e_1) ≠ ε)
9                      then q' ← GETSTATE(n(e_1), n(e_2), 0)
10                         E ← E ∪ { ⟨q, ℓ(e_1):ℓ(e_2), w(e_1) ⊗ w(e_2), q'⟩ }
11         for ∀e_1 ∈ E(q_1) do
12             if  ℓ_j(e_1) = ε ∧ q_ε ∈ {0, 1}
13                 then q' ← GETSTATE(n(e_1), q_2, 1)
14                     E ← E ∪ { ⟨q, ℓ(e_1):ε^{(n_2)}, w(e_1), q'⟩ }
15         for ∀e_2 ∈ E(q_2) do
16             if  ℓ_k(e_2) = ε ∧ q_ε ∈ {0, 2}
17                 then q' ← GETSTATE(q_1, n(e_2), 2)
18                     E ← E ∪ { ⟨q, ε^{(n_1)}:ℓ(e_2), w(e_2), q'⟩ }
19     return A


GETSTATE(q_1, q_2, q_ε) → q :

20     if  ∃q' ∈ Q : ϑ[q'] = (q_1, q_2, q_ε)
21         then q ← q'
22         else Q ← Q ∪ {q}                    [create new state]
23             ϱ(q) ← ϱ(q_1) ⊗ ϱ(q_2)
24             ϑ[q] ← (q_1, q_2, q_ε)
25             push(Stack, q)
26     return q
```

## FIG. 15

## FIG. 16

$W_1$    $W_2$    $W_3$    $W_4$    $W_5$

## FIG. 17

words | $W_1$ | $W_2$ | $W_3$ | $W_4$ | $\pi_i(W)$

## FIG. 18

word    1 | $W_2$ | $e(W)$

$\cap$

1,1

word    1 | $W_2$
lemma   2 | $l_{2,1}$   $\pi(L)$
POS    3 | $P_{2,1}$

## FIG. 19

| | | | | | |
|---|---|---|---|---|---|
| words | 1 | $W_1$ | $W_2$ | $W_3$ | $W_4$ |
| lemmata | 2 | $l_1$ | $l_2$ | $l_3$ | $l_4$ |
| POS | 3 | $p_1$ | $p_2$ | $p_3$ | $p_4$ |
| other info | 4 | $x_1$ | $x_2$ | $x_3$ | $x_4$ |

$\pi_i(W)$

$\cap$

3,1

POS    1 | $p_1$ | $p_2$ | $p_3$ | $p_4$ | $\pi(H)$

FIG. 20

FIG. 21

## GENERAL PURPOSE COMPUTER SYSTEM
*1610*
*1614*

### SOFTWARE
*1642*
- NLP METHODS AND APPLICATIONS
- WMTAs AND MTAs METHODS *1640*
- REGULAR EXPRESSION COMPILER *1638*
- OPERATING SYSTEM SOFTWARE *1636*

*1612*

### HARDWARE
*1618*
- MEMORY
- PROCESSOR *1616*
- PERSISTENT STORAGE *1620*

- USER I/O *1622*
- NETWORK I/O *1624*

CAMERA *1604*
MICROPHONE *1608*
SPEAKERS *1606*
POINTING DEVICE *1628*
DISPLAY *1630*
KEYBOARD *1626*

NETWORK *1632*

## FIG. 22

# EP 1 531 400 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030004705 A1

### Non-patent literature cited in the description

- Weighted finite-state transducers in speech recognition. **M. MOHRI et al.** Computer Speech and Language. Elsevier, January 2002, vol. 16, 69-88
- **M. REAPE ; H. THOMPSON.** Parallel intersection and serial composition of finite state transducers. *Proceedings of the 12th Conference on Computational Linguistics,* 22 August 1988, 535-539
- **G.A. KIRAZ.** Linearization of nonlinear lexical representations. *Computational Phonology: Third Meeting of the ACL special interest group in computational phonology,* 1997, 57-62
- Speech recognition by composition of weighted finite automata. **F. PEREIRA ; M. RILEY.** Finite-State Language Processing. MIT Press, 1997
- **M. MOHRI et al.** Weighted automata in text and speech processing. *Extended Finite State Models of Language: Proceedings of the ECAI' 96 Workshop,* 1996
- Extraction of epsilon-cycles from finite state transducers. **A. KEMPE.** Lecture Notes in Computer Science. Springer, 2002, 190-201
- **KAPLAN ; KAY.** Regular models of phonological rule systems. *Computational Linguistics,* 1994, vol. 20 (3), 331-378
- Multi-tape automata for speech and language systems: A prolog implementation. **KIRAZ ; GRIMLEY-EVANS.** Automata Implementation, number 1436 in Lecture Notes in Computer Science. Springer Verlag, 1998
- **EILENBERG.** Automata, Languages, and Machines. Academic Press, 1974, vol. A
- Semirings, Automata, Languages. **KUICH ; SALOMAA.** Number 5 in EATCS Monographs on Theoretical Computer Science. Springer Verlag, 1986

- **ELGOT ; MEZEI.** On relations defined by generalized finite automata. *IBM Journal of Research and Development,* 1965, vol. 9, 47-68
- Speech recognition by composition of weighted finite automata. **PEREIRA ; RILEY.** Finite-State Language Processing. MIT Press, 1997, 431-453
- **MOHRI ; PEREIRA ; RILEY.** A rational design for a weighted finite-state transducer library. *Lecture Notes in Computer Science,* 1998, vol. 1436, 144-158
- **MOHRI.** Generic epsilon-removal and input epsilon-normalization algorithms for weighted transducers. *International Journal of Foundations of Computer Science,* 2002, vol. 13 (1), 129-143
- **MOHRI ; PEREIRA ; RILEY.** A rational design for a weighted finite-state transducers. *Lecture Notes in Computer Science,* 1998, vol. 1436, 144-158
- Parameter Estimation For Probabilistic Finite-state Transducers. **EISNER.** Proceedings of the 40th Annual Meeting. Association For Computer Linguistics, 2002, 1-8
- **SCHULZ ; MIHOV.** Fast string correction with Levenshtein automata. *International Journal on Document Analysis and Recognition,* 2002, vol. 5 (1), 67-85
- The replace operator. **KARTTUNEN.** Proceedings of the 33rd Annual Meeting, Cambridge. Association for Computational Linguistics, 1995, 16-23
- Parallel replacement in finite-state calculus. **KEMPE ; KARTTUNEN.** Proceedings of the 16th International Conference on Computational Linguistics. ACL, 1996, vol. 2, 622-627